(19) Europäisches Patentamt
European Patent Office
Office européen des brevets

(11) **EP 4 779 429 A1**

(12) **EUROPEAN PATENT APPLICATION**

(43) Date of publication:
**22.07.2026 Bulletin 2026/30**

(21) Application number: **25210676.0**

(22) Date of filing: **23.10.2025**

(51) International Patent Classification (IPC):
**G05D 1/48** *(2024.01)*     **G05D 109/20** *(2024.01)*
**G05D 1/65** *(2024.01)*     **G05D 1/646** *(2024.01)*
**G05D 1/43** *(2024.01)*

(52) Cooperative Patent Classification (CPC):
**G05D 1/646; G05D 1/43; G05D 1/484; G05D 1/65;**
G05D 2109/20

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **20.01.2025 US 202519032324**

(71) Applicant: **The Boeing Company**
**Arlington, VA 22202 (US)**

(72) Inventors:
• **Ramirez Blanco, Salvador**
**Arlington, 22202 (US)**
• **Miguel, Daniel**
**Arlington, 22202 (US)**
• **Villanueva, Sergio**
**Arlington, 22202 (US)**
• **Bui, Binh Quang An**
**Arlington, 22202 (US)**

(74) Representative: **Witte, Weller & Partner**
**Patentanwälte mbB**
**Postfach 10 54 62**
**70047 Stuttgart (DE)**

(54) **LOCKING BANK ANGLE AND GROUND SPEED PARAMETERS**

(57)     A flight management system of an aircraft may determine that a leg of a lateral trajectory profile, of a flight plan for the aircraft is active. The FMS may determine, based on determining that the leg of the lateral trajectory profile is active, that a distance between the aircraft and an end waypoint associated with the leg satisfies a distance threshold and may therefore perform an update to the lateral trajectory profile so as to lock a bank angle parameter to a particular bank angle value. The FMS may further determine that a transition, which is associated with the end waypoint and another leg of the lateral trajectory profile, is active and may therefore perform an update to the lateral trajectory profile to lock a ground speed parameter to a particular ground speed value.

FIG. 7

**Description**

FIELD

The present disclosure relates generally to a flight management system (FMS) of an aircraft and to the FMS locking a bank angle parameter and a ground speed parameter.

BACKGROUND

A lateral trajectory profile of a flight plan can provide information related to lateral turns and transitions between waypoints and other navigation points identified by the flight plan. An FMS of an aircraft determines a turn radius for a transition based on a ground speed of the aircraft and a bank angle of the aircraft.

SUMMARY

In some implementations, an FMS of an aircraft comprises one or more memories; and one or more processors, communicatively coupled to the one or more memories, configured to: determine that a leg of a lateral trajectory profile, which is associated with a flight plan for the aircraft, is active; determine, based on determining that the leg of the lateral trajectory profile is active, that a lateral distance between the aircraft and an end waypoint associated with the leg satisfies a lateral distance threshold; perform, based on determining that the lateral distance satisfies the lateral distance threshold, an update to the lateral trajectory profile to lock a bank angle parameter to a particular bank angle value; determine that a transition, which is associated with the end waypoint and another leg of the lateral trajectory profile, is active and that the leg is active; and perform, based on determining that the transition is active and that the leg is active, an update to the lateral trajectory profile to lock a ground speed parameter to a particular ground speed value.

In some implementations, a non-transitory computer-readable medium storing a set of instructions comprising one or more instructions that, when executed by one or more processors of an FMS of an aircraft, cause the FMS to: determine that a leg of a lateral trajectory profile, which is associated with a flight plan for the aircraft, is active; determine, based on determining that the leg of the lateral trajectory profile is active, a lateral distance threshold associated with an end waypoint of the leg; determine whether a lateral distance between the aircraft and the end waypoint satisfies the lateral distance threshold; and selectively perform one of: a first update to the lateral trajectory profile, based on determining that the lateral distance satisfies the lateral distance threshold, to lock a bank angle parameter to a particular bank angle value at which a bank angle of the aircraft has been set, or a second update to the lateral trajectory profile, based on determining that the lateral distance does not satisfy the lateral distance threshold, to set the bank angle parameter to another bank angle value.

In some implementations, a method comprises determining, by an FMS of an aircraft, based on determining that a leg of a lateral trajectory profile is active, whether a lateral distance between the aircraft and an end waypoint of the leg satisfies a lateral distance threshold; and selectively performing one of: a first update to the lateral trajectory profile, based on determining that the lateral distance satisfies the lateral distance threshold, to lock a bank angle parameter to a particular bank angle value, or a second update to the lateral trajectory profile, based on determining that the lateral distance does not satisfy the lateral distance threshold, to set the bank angle parameter to another bank angle value.

The following provides an overview of some Aspects of the present disclosure:

In an Aspect, an FMS of an aircraft, comprising: one or more memories; and one or more processors, communicatively coupled to the one or more memories, configured to: determine that a leg of a lateral trajectory profile, which is associated with a flight plan for the aircraft, is active; determine, based on determining that the leg of the lateral trajectory profile is active, that a lateral distance between the aircraft and an end waypoint associated with the leg satisfies a lateral distance threshold; perform, based on determining that the lateral distance satisfies the lateral distance threshold, an update to the lateral trajectory profile to lock a bank angle parameter to a particular bank angle value; determine that a transition, which is associated with the end waypoint and another leg of the lateral trajectory profile, is active and that the leg is active; and perform, based on determining that the transition is active and that the leg is active, an update to the lateral trajectory profile to lock a ground speed parameter to a particular ground speed value.

In a further Aspect, the one or more processors are further configured to: determine, based on the bank angle parameter and the ground speed parameter, a turn radius of the transition that is to be fixed until the leg is no longer active.

In a further Aspect, the one or more processors are further configured to: determine that the leg of the lateral trajectory profile is no longer active; and perform, based on determining that the leg of the lateral trajectory profile is no longer active, an update to the lateral trajectory profile to unlock the bank angle parameter and to unlock the ground speed parameter.

In a further Aspect, the one or more processors are further configured to: determine, after performing the update to the lateral trajectory profile to unlock the bank angle parameter and to unlock the ground speed parameter, and based on a roll limit associated with the aircraft and a course change associated with the leg and the other leg, another particular bank angle value; and perform an update to the lateral trajectory profile to set the bank angle parameter to the other particular bank angle value.

In a further Aspect, the one or more processors are further configured to: determine, after performing the update to the lateral trajectory profile to unlock the bank angle parameter and to unlock the ground speed parameter, and based on a vertical trajectory profile associated with the flight plan, another particular ground speed value; and perform an update to the lateral trajectory profile to set the ground speed parameter to the other particular ground speed value.

In a further Aspect, the one or more processors are further configured to: determine, based on determining that the leg of the lateral trajectory profile is active, the lateral distance threshold associated with the end waypoint of the leg.

In a further Aspect, the one or more processors, to determine the lateral distance threshold, are configured to: identify, based on determining that the leg of the lateral trajectory profile is active, a minimum bank angle value associated with the lateral trajectory profile; identify, based on determining that the leg of the lateral trajectory profile is active, that a ground speed of the aircraft has an established ground speed value; determine, based on the minimum bank angle value and the established ground speed value, a maximum radius for the transition; and determine, based on the maximum radius and a course change associated with the leg and the other leg, the lateral distance threshold.

In an Aspect, a non-transitory computer-readable medium storing a set of instructions, the set of instructions comprising: one or more instructions that, when executed by one or more processors of an FMS of an aircraft, cause the FMS to: determine that a leg of a lateral trajectory profile, which is associated with a flight plan for the aircraft, is active; determine, based on determining that the leg of the lateral trajectory profile is active, a lateral distance threshold associated with an end waypoint of the leg; determine whether a lateral distance between the aircraft and the end waypoint satisfies the lateral distance threshold; and selectively perform one of: a first update to the lateral trajectory profile, based on determining that the lateral distance satisfies the lateral distance threshold, to lock a bank angle parameter to a particular bank angle value at which a bank angle of the aircraft has been set, or a second update to the lateral trajectory profile, based on determining that the lateral distance does not satisfy the lateral distance threshold, to set the bank angle parameter to another bank angle value.

In a further Aspect, the one or more instructions, when executed by the one or more processors, further cause the FMS to: determine, after performing the first update to the lateral trajectory profile, that the leg of the lateral trajectory profile is no longer active; and perform, based on determining that the leg of the lateral trajectory profile is no longer active, a third update to the lateral trajectory profile to unlock the bank angle parameter.

In a further Aspect, the one or more instructions, when executed by the one or more processors, further cause the FMS to: determine, after performing the first update to the lateral trajectory profile, whether a transition, which is associated with the end waypoint, is active; and selectively perform one of: a third update to the lateral trajectory profile, based on determining that the transition is active, to lock a ground speed parameter to a particular ground speed value at which a ground speed of the aircraft has been set, or a fourth update to the lateral trajectory profile, based on determining that the transition is not active, to set the ground speed parameter to another particular ground speed value.

In a further Aspect, the one or more instructions, that cause the FMS to perform the third update to the lateral trajectory profile, cause the FMS to: determine, based on determining that the transition is active, that the leg is still active; and perform, based on determining that the leg is still active, the third update to the lateral trajectory profile.

In a further Aspect, the one or more instructions, that cause the FMS to perform the first update to the lateral trajectory profile, cause the FMS to: cause a bank angle of the aircraft to be locked at the particular bank angle value until the leg is no longer active, based on the first update being performed; and wherein the one or more instructions, that cause the FMS to perform the third update to the lateral trajectory profile, cause the FMS to: cause a ground speed of the aircraft to be locked at the particular ground speed value until the leg is no longer active, based on the third update being performed.

In a further Aspect, the one or more instructions, when executed by the one or more processors, further cause the FMS to: determine, after performing the third update to the lateral trajectory profile, that the leg of the lateral trajectory profile is no longer active; and perform, based on determining that the leg of the lateral trajectory profile is no longer, a fifth update to the lateral trajectory profile to unlock the bank angle parameter and to unlock the ground speed parameter.

In a further Aspect, the one or more instructions, when executed by the one or more processors, further cause the FMS to: perform, after performing the fifth update to the lateral trajectory profile, a sixth update to the lateral trajectory profile to set the bank angle parameter to another particular bank angle value.

In a further Aspect, the one or more instructions, when executed by the one or more processors, further cause the FMS to: perform, after performing the fifth update to the lateral trajectory profile, a sixth update to the lateral trajectory profile to set the ground speed parameter to another particular ground speed value.

In a further Aspect, the one or more instructions, that cause the FMS to determine the lateral distance threshold, cause the FMS to: determine, based on a minimum bank angle value associated with the lateral trajectory profile and a particular ground speed value at which a ground speed of the aircraft is established, a maximum radius for a transition associated with the end waypoint; and determine, based on the maximum radius, the lateral distance threshold.

In an Aspect, a method, comprising: determining, by an FMS of an aircraft, based on determining that a leg of a lateral trajectory profile is active, whether a lateral distance between the aircraft and an end waypoint of the leg satisfies a lateral distance threshold; and selectively performing one of: a first update to the lateral trajectory profile, based on determining that the lateral distance satisfies the lateral distance threshold, to lock a bank angle parameter to a particular bank angle value, or a second update to the lateral trajectory profile, based on determining that the lateral distance does not satisfy the lateral distance threshold, to set the bank angle parameter to another bank angle value.

In a further Aspect, the method further comprising: performing, after performing the first update to the lateral trajectory profile and based on determining that the leg of the lateral trajectory profile is no longer active, a third update to the lateral trajectory profile to cause the lateral trajectory profile to unlock the bank angle parameter.

In a further Aspect, the method further comprising: selectively performing, after performing the first update to the lateral trajectory profile, one of: a third update to the lateral trajectory profile, based on determining that a transition associated with the end waypoint is active, to lock a ground speed parameter to a particular ground speed value, or a fourth update to the lateral trajectory profile, based on determining that the transition associated with the end waypoint is not active, to set the ground speed parameter to another particular ground speed value.

In a further Aspect, the method further comprising: performing, after performing the third update to the lateral trajectory profile and based on determining that the leg of the lateral trajectory profile is no longer active, a fifth update to the lateral trajectory profile to unlock the bank angle parameter and to unlock the ground speed parameter.

In an Aspect, a system configured to perform one or more operations recited in one or more of the Aspects described herein.

In an Aspect, an apparatus comprising means for performing one or more operations recited in one or more of the Aspects described herein.

In an Aspect, a computer program product comprising instructions or code for executing one or more operations recited in one or more of the Aspects described herein.

The foregoing disclosure provides illustration and description, but is not intended to be exhaustive or to limit the implementations described herein to the precise forms that are described. Modifications and variations may be made in light of the above description or may be acquired from practice of the implementations described herein.

The features, functions, and advantages that have been discussed can be achieved independently in various implementations or may be combined in yet other implementations further details of which can be seen with reference to the following description and drawings.

BRIEF DESCRIPTION OF THE DRAWINGS

Figs. 1A-1K are diagrams of an example implementation associated with locking a bank angle parameter and a ground speed parameter.

Fig. 2 is a diagram of an example environment in which systems and/or methods described herein may be implemented.

Fig. 3 is a diagram of example components of a device associated with locking a bank angle parameter and a ground speed parameter.

Fig. 4 is an example plot associated with dynamically computing a bank angle parameter.

Figs. 5A and 5B are diagrams of example implementations associated with determining a turn anticipation distance for a transition.

Figs. 6A-6C are diagrams of example implementations associated with a turn radius of a transition.

Fig. 7 is a flowchart of an example process associated with locking a bank angle parameter and a ground speed parameter.

DETAILED DESCRIPTION

The following detailed description of example implementations refers to the accompanying drawings. The same reference numbers in different drawings may identify the same or similar elements.

An FMS of an aircraft computes and updates trajectory profiles of a flight plan for the aircraft. A goal of the FMS is to enable stability of a lateral trajectory of the aircraft during flight, and thereby avoid sudden navigational changes that can result in cross-track errors. In many cases, a transition from a leg to another leg is indicated by a lateral trajectory profile of the flight plan, and the FMS calculates a turn radius for the transition while the aircraft traverses the transition (e.g., while the aircraft flies along a path of the transition). The FMS determines the turn radius based on a current ground speed of the aircraft and a current bank angle of the aircraft. In some cases, a change to the ground speed or the bank angle causes the turn radius of the transition to abruptly change. Because the aircraft is traversing the transition at the time of the abrupt change to the turn radius of the transition, the aircraft can deviate from the path of the transition. Thus, the FMS, as well as other guidance systems of the aircraft, often needs to cause the aircraft to make corrective maneuvers to realign the aircraft with the path of the transition. This increases a workload of the FMS and the other guidance systems of the aircraft to calculate and implement the corrective maneuvers, and can increase a fuel consumption of the aircraft to perform the corrective maneuvers.

Some implementations described herein include an FMS of an aircraft. The FMS identifies a lateral trajectory profile associated with a flight plan of the aircraft, which indicates multiple legs between waypoints or other navigation points, and one or more transitions (e.g., from a leg to another leg). The lateral trajectory profile can also indicate a bank angle parameter (e.g., associated with a bank angle of the aircraft) and a ground speed parameter (e.g., associated with a ground speed of the aircraft) that the FMS uses to determine a turn radius for each of the one or more transitions.

In some implementations, the FMS determines that a leg of the lateral trajectory profile is active. That is, the FMS determines that the aircraft is currently traversing a leg that is indicated by the lateral trajectory profile. Accordingly, the FMS determines whether a lateral distance between the aircraft and an end waypoint associated with the leg satisfies (e.g., is less than or equal to) a lateral distance threshold. The lateral distance threshold may be, for example, a maximum distance from the end waypoint that is associated with a maximum turn radius for a transition from the leg to another leg. When the FMS determines that the lateral distance threshold is not satisfied, the FMS performs an update to the lateral trajectory profile to set the bank angle parameter of the lateral trajectory profile to a bank angle value that is dynamically computed by the FMS. Alternatively, when the FMS determines that the lateral distance threshold is satisfied, the FMS performs an update to the lateral trajectory profile to lock the bank angle parameter to a particular bank angle value, such as to an established bank angle value (e.g., at which the bank angle of the aircraft has been set). The bank angle parameter is then locked until the leg is no longer active.

Additionally, after performing the update to the lateral trajectory profile to lock the bank angle parameter, the FMS determines whether the transition is active (e.g., whether the aircraft is traversing the transition). When the FMS determines that the transition is not active, the FMS performs an update to the lateral trajectory profile to set the ground speed parameter of the lateral trajectory profile to a ground speed value that is dynamically computed by the FMS. Alternatively, when the FMS determines that the transition is active, the FMS performs an update to the lateral trajectory profile to lock the ground speed parameter to a particular ground speed value, such as to an established ground speed value (e.g., at which the ground speed of the aircraft has been set). The ground speed parameter is then locked until the leg is no longer active.

Accordingly, when the bank angle parameter and the ground speed parameter are both locked, the FMS determines a turn radius of the transition (e.g., based on the locked bank angle parameter and the locked ground speed parameter). Because the bank angle parameter and the ground speed parameter are locked until the leg is no longer active (e.g., until the aircraft passes a leg sequence point for the leg that is associated with the transition), the turn radius of the transition is fixed (e.g., does not deviate) while the leg is active. Further, in some implementations, the FMS causes, while the leg is active, the bank angle of the aircraft to be locked at the particular bank angle value (e.g., as indicated by the locked bank angle parameter) and/or the ground speed of the aircraft to be locked at the particular ground speed value (e.g., as indicated by the locked ground speed parameter) to ensure that the aircraft travels along the fixed turn radius of the transition.

In this way, the FMS prevents the turn radius of the transition from abruptly changing while the aircraft traverses the transition. Thus, because there is no abrupt change to the turn radius, the aircraft is less likely to deviate from a path of the transition. Corrective maneuvers to realign the aircraft with the path of the transition are therefore less likely to be needed. A workload of the FMS, as well as other guidance systems of the aircraft, to calculate and implement any corrective maneuvers is thus reduced, and a fuel efficiency of the aircraft is improved by the aircraft not performing, or performing fewer, corrective maneuvers.

After the leg is no longer active, the FMS unlocks the bank angle parameter and the ground speed parameter. At this point, the next leg is now active and the FMS iteratively performs at least some of the operations described above. For example, starting with the other leg, the FMS performs updates to the lateral trajectory profile to lock and unlock the bank angle parameter and the ground speed parameter to facilitate determining respective turn radii of other transitions that are indicated by the lateral trajectory profile. Because the respective turn radii for the other transitions are fixed, the aircraft is less likely to deviate from respective paths of the other transitions, and therefore other corrective maneuvers to realign the aircraft with respective paths of the other transitions are likely not needed. This further reduces the workload of the FMS, as well as the other guidance systems of the aircraft, and further improves the fuel efficiency of the aircraft.

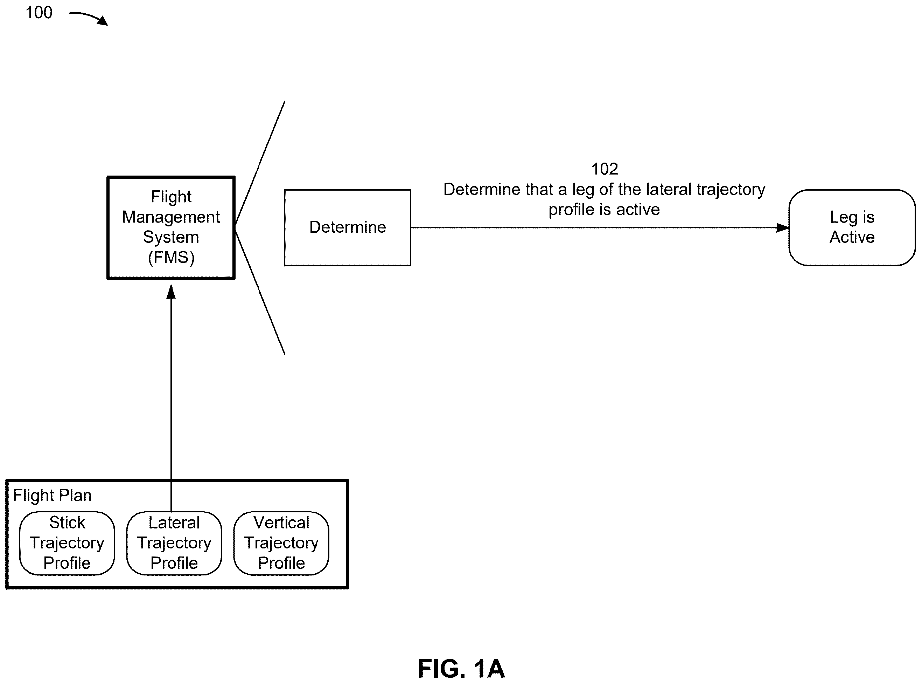

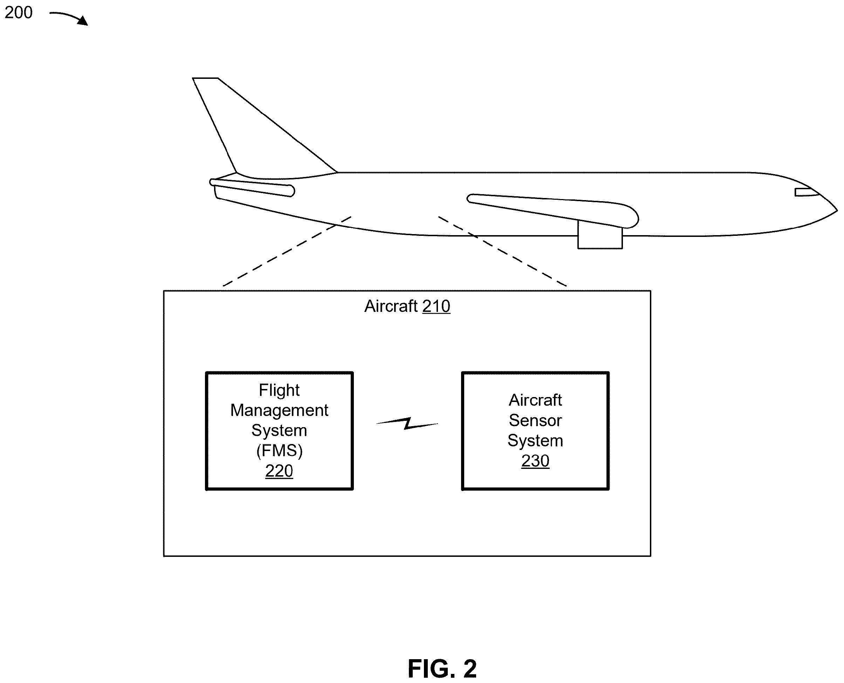

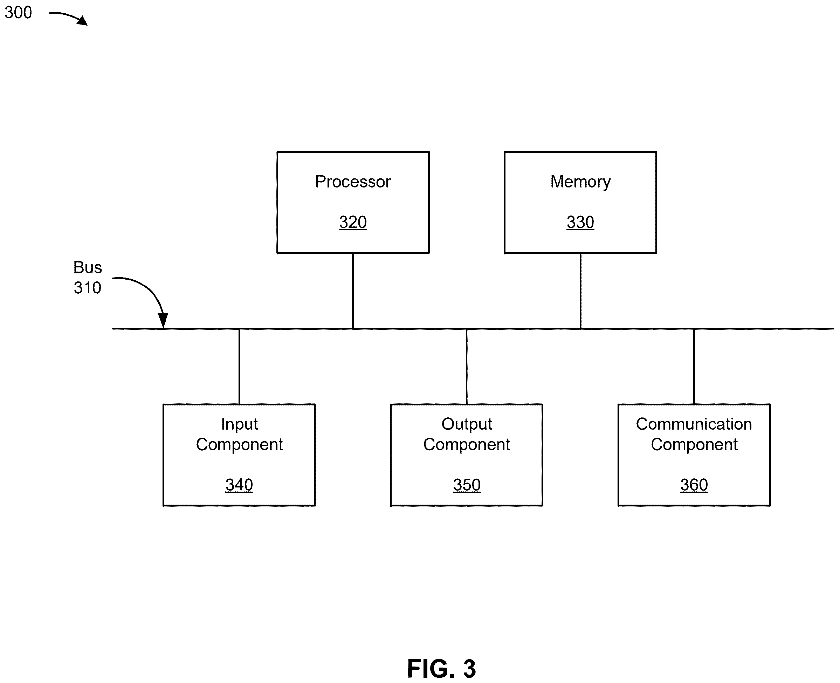

Figs. 1A-1K are diagrams of an example implementation 100 associated with locking a bank angle parameter and a ground speed parameter. As shown in Figs. 1A-1K, example implementation 100 comprises devices of an aircraft, including an FMS and an aircraft sensor system. These devices are described in more detail below in connection with Fig. 2 and Fig. 3.

The FMS uses a flight plan for the aircraft as an input to perform one or more functions associated with the aircraft, such as navigation, fuel management, and/or performance optimization. The flight plan indicates waypoints and other navigation points of a route that an aircraft is to follow during a flight. The flight plan also includes a stick trajectory profile, a lateral trajectory profile, and a vertical trajectory profile. The stick trajectory profile indicates a non-continuous and non-flyable lateral trajectory (e.g., that indicates lines, or "sticks", and simple turn arcs between the waypoints and the other navigation points indicated by the flight plan). The lateral trajectory profile indicates a continuous and flyable lateral trajectory (e.g., based on the stick trajectory) that includes additional details related to turns and transitions between the waypoints and the other navigation points. For example, the lateral trajectory profile can indicate a transition from a first leg of the lateral trajectory profile to a second leg of the lateral trajectory profile. The lateral trajectory profile can also indicate a bank angle parameter (e.g., associated with a bank angle of the aircraft) and a ground speed parameter (e.g., associated with a ground speed of the aircraft), which can be used (e.g., by the FMS) to determine a turn radius for each transition indicated by the lateral trajectory profile. The vertical trajectory profile indicates an altitude and a ground speed associated with each of the waypoints and the other navigation points indicated by the flight plan.

Accordingly, to use the flight plan, the FMS may identify each of the stick trajectory profile, the lateral trajectory profile, and the vertical trajectory profile (e.g., as input to the FMS). Further, the FMS may iteratively update the stick trajectory profile, the lateral trajectory profile, and/or the vertical trajectory profile throughout the flight, such as based on information provided in the flight plan (e.g., information indicating the bank angle of the aircraft) and/or information provided by the aircraft sensor system (e.g., information that indicates the ground speed of the aircraft and/or information that indicates a position of the aircraft). Operations described herein in relation to Figs. 1A-1K are associated with the FMS performing updates to the lateral trajectory profile to lock the bank angle parameter and/or the ground speed parameter, such as to enable determination of a fixed turn radius of a transition from a leg to another leg (e.g., that are both indicated by the lateral trajectory profile).

In some implementations, as shown in Fig. 1A, and by reference number 102, the FMS determines that a leg of the lateral trajectory profile is active. That is, the FMS may determine that the aircraft is currently traversing a leg that is indicated by the lateral trajectory profile. For example, the FMS may monitor a position of the aircraft (e.g., based on information obtained from the aircraft sensor system) and may determine that the leg is active when the aircraft enters a defined airspace or path associated with the leg (e.g., as indicated by the lateral trajectory profile).

The lateral trajectory profile indicates an end waypoint that is associated with the leg. That is, the lateral trajectory profile may indicate that the end waypoint is an end of the leg and a start of another leg. The lateral trajectory profile therefore may also indicate a transition (e.g., that is associated with the end waypoint) from the leg to the other leg. A leg sequence point may be associated with the transition, which indicates a position, along the transition, at which the aircraft ceases traversing the leg and starts traversing the other leg (e.g., a position at which the leg ceases being active and the other leg becomes active).

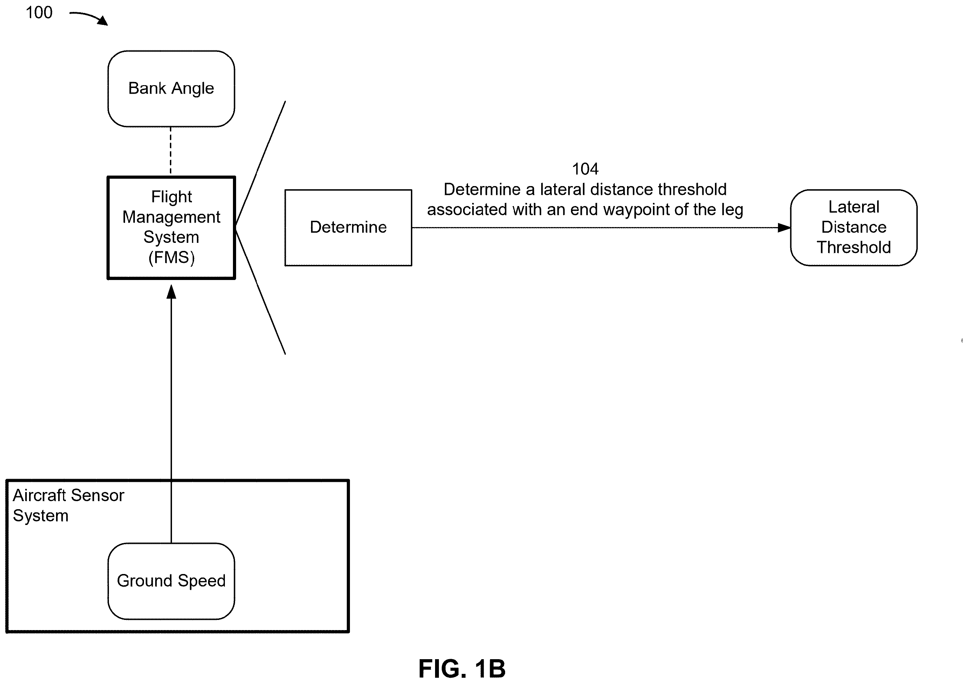

In some implementations, as shown in Fig. 1B, and by reference number 104, the FMS determines a lateral distance threshold associated with the end waypoint of the leg (e.g., based on determining that the leg is active). The lateral distance threshold may be, for example, a maximum lateral distance from the end waypoint that is associated with a maximum turn radius for the transition between the leg and the other leg. That is, the lateral distance threshold may be a maximum turn anticipation distance for ensuring that the transition has the maximum turn radius. The lateral distance threshold may be indicated by the following:

$$d_{max} = abs(R_{max}) \cdot \tan(\frac{abs(courseChange)}{2}), \; where \; R_{max} = \frac{V^2}{g \cdot \tan(\phi_{min})}$$

where $d_{max}$ is the lateral distance threshold, $R_{max}$ is the maximum turn radius for the transition, $V$ is a ground speed of the aircraft, $g$ is the gravity constant, $\phi_{min}$ is a minimum allowable bank angle of the aircraft (e.g., as indicated by the lateral trajectory profile), such as 8 degrees, and $courseChange$ indicates a change in heading of the aircraft in association with transitioning from the leg to the other leg.

Accordingly, the FMS may identify (e.g., based on information obtained from the aircraft sensor system) that the ground speed of the aircraft has an established ground speed value (e.g., the ground speed of the aircraft is actively set to the established ground speed value at the time of determining the lateral distance threshold) and may identify a minimum bank angle value associated with the lateral trajectory profile (e.g., a minimum bank angle for the aircraft, as indicated by the lateral trajecotry profile or the flight plan). The FMS may thereby determine (e.g., based on the minimum bank angle value and the established ground speed value), the maximum radius for the transition. Thus, the FMS may determine the lateral distance threshold, based on the maximum radius and a course change associated with the leg and the other leg.

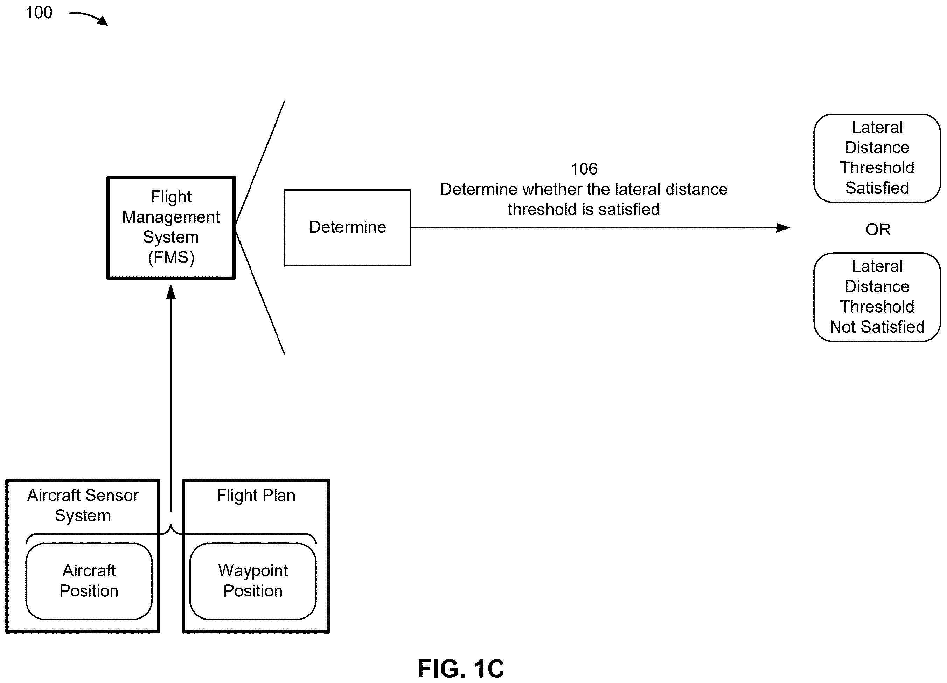

In some implementations, as shown in Fig. 1C, and by reference number 106, the FMS determines whether the lateral distance threshold is satisfied. That is, the FMS may determine whether a lateral distance between the aircraft and the end waypoint satisfies (e.g., is less than or equal to) the lateral distance threshold. Put another way, the FMS may determine whether the lateral distance between the aircraft and the end waypoint is less than or equal to $d_{max}$.

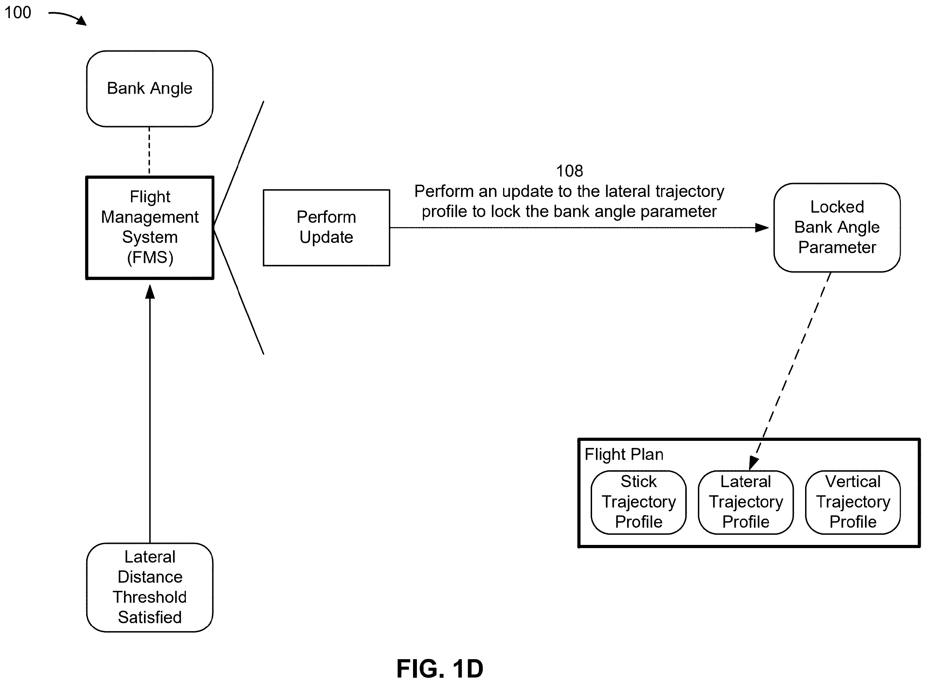

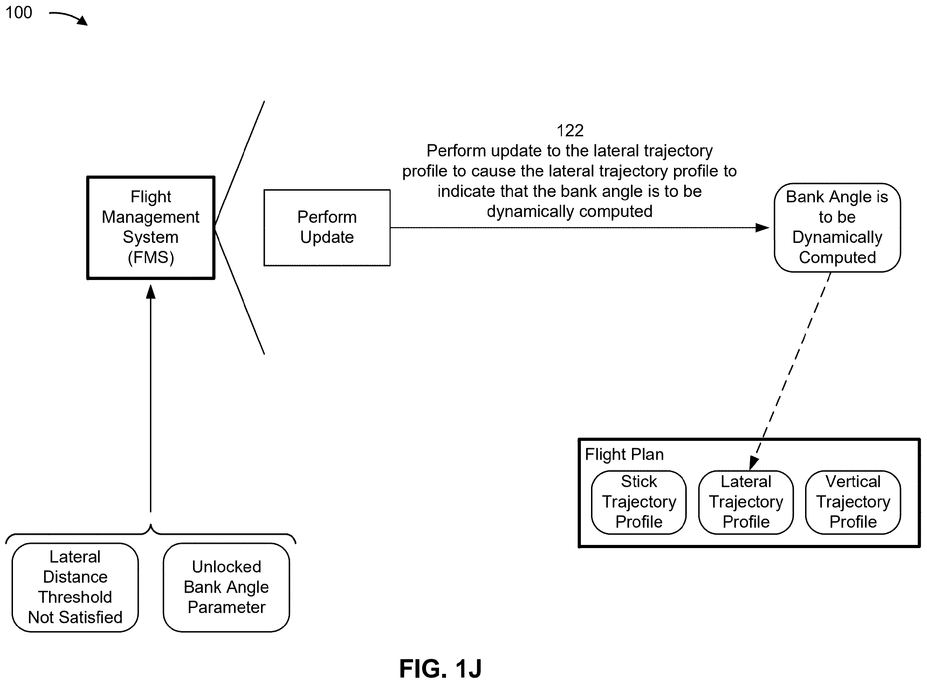

The FMS may determine whether the lateral distance threshold is satisfied based on the position of the aircraft (shown as "Aircraft Position" in Fig. 1C) (e.g., based on information obtained from the aircraft sensor system) and a position of the end waypoint (shown as "Waypoint Position" in Fig. 1C) (e.g., based on information indicated by the flight plan). For example, the FMS may determine the lateral distance between the aircraft and the end waypoint based on the respective positions (e.g., respective lateral positions) of the aircraft and the end waypoint, and then may determine whether the lateral distance is less than or equal to the lateral distance threshold. In this way, the FMS may determine that the lateral distance satisfies the lateral distance threshold, or, alternatively, that the lateral distance does not satisfy the lateral distance threshold. Based on determining that the lateral distance threshold is satisfied, the FMS may perform one or more operations described herein in association with Fig. 1D. Alternatively, based on determining that the lateral distance threshold is not satisfied, the FMS may perform one or more operations described herein in association with Fig. 1J.

In some implementations, as shown in Fig. 1D, and by reference number 108, the FMS performs an update to the lateral trajectory profile (e.g., based on determining that the lateral distance satisfies the lateral distance threshold, as described herein in relation to Fig. 1C and reference number 106). The FMS may perform the update to the lateral trajectory profile to lock the bank angle parameter, such as to a particular bank angle value. The particular bank angle value may be, for example, an established bank angle value (e.g., a particular bank angle value at which the bank angle has been set at the time of updating the lateral trajectory profile), which may have been set by the FMS. The FMS may perform the update to the lateral trajectory profile to lock the bank angle parameter to the particular bank angle value until the leg is no longer active (e.g., to prevent updates to the bank angle parameter until the leg is no longer active).

Performing the update to the lateral trajectory profile to lock the bank angle parameter to the particular bank angle value may cause the bank angle of the aircraft to be locked at the particular bank angle value (e.g., as indicated by the locked bank angle parameter), such as until the leg is no longer active. For example, performing the update to the lateral trajectory profile may cause the FMS to set and maintain the bank angle of the aircraft at the particular bank angle value (e.g., until the leg is no longer active).

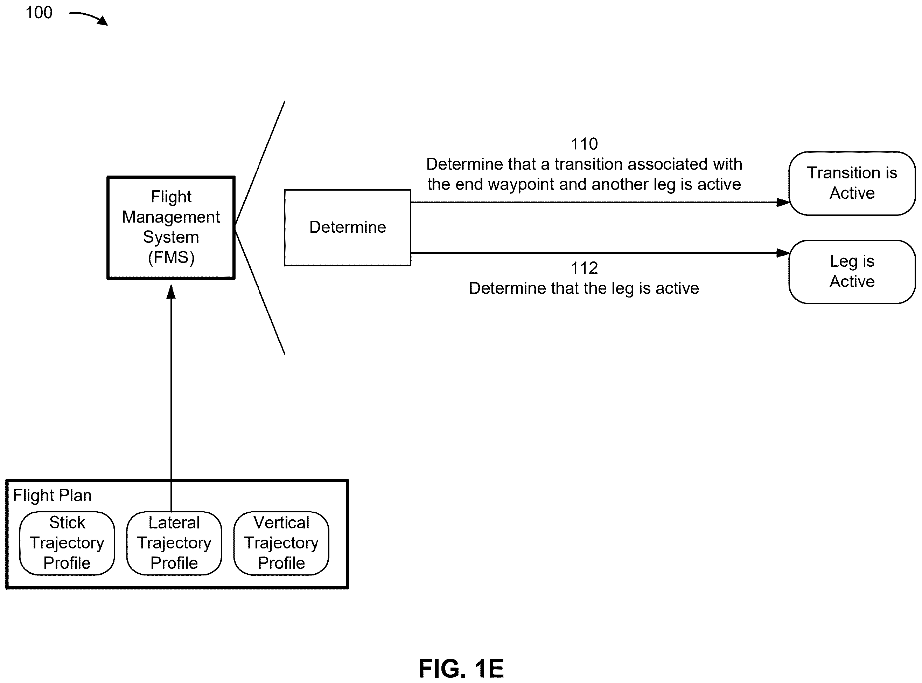

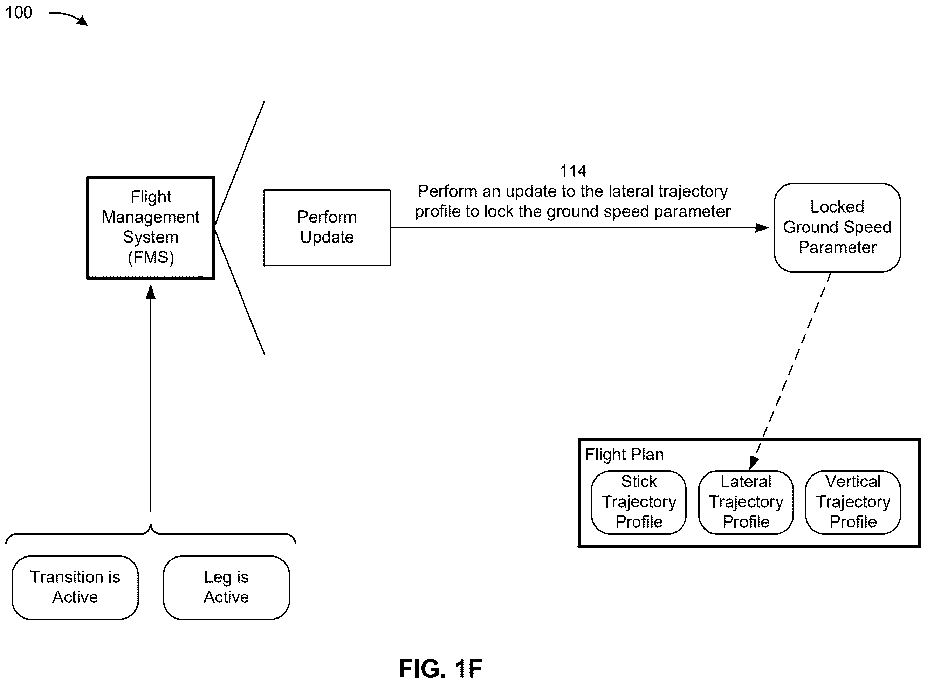

In some implementations, as shown in Fig. 1E, and by reference number 110, the FMS determines that the transition associated with the end waypoint and the other leg is active (e.g., after performing the update to the lateral trajectory profile to lock the bank angle parameter). That is, the FMS may determine that aircraft is traversing the transition. For example, the FMS may monitor a position of the aircraft (e.g., based on information obtained from the aircraft sensor system) and may determine that the transition is active when the aircraft enters a defined airspace or path associated with the transition (e.g., as indicated by the lateral trajectory profile). The FMS therefore may perform one or more operations described herein in association with Fig. 1E and reference number 112 and/or with Fig. 1F and reference number 114.

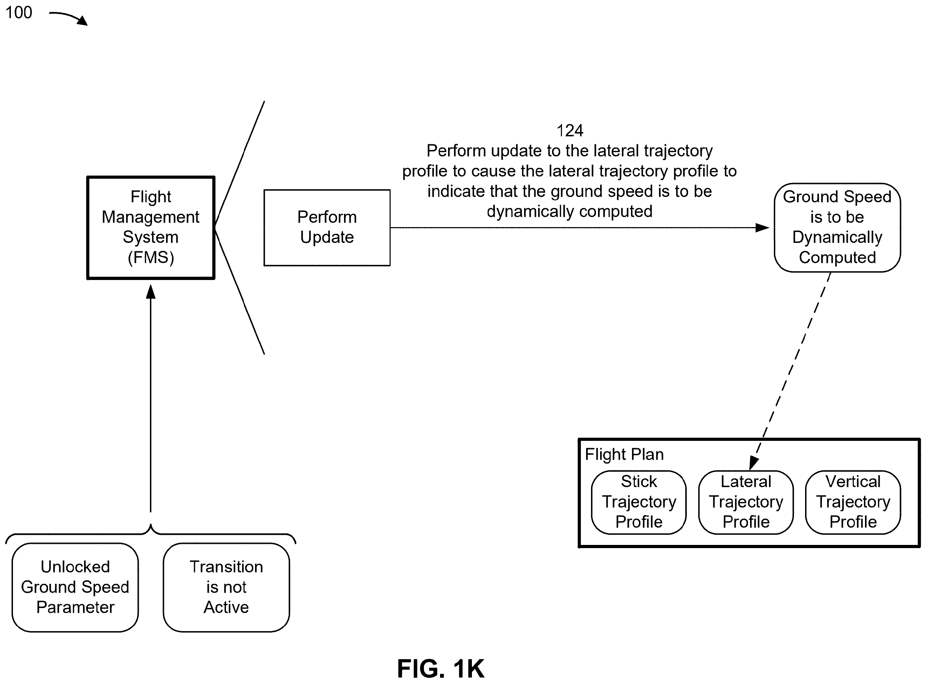

Alternatively, in some implementations, the FMS determines that the transition is not active (or is not active yet). That is, the FMS may determine that aircraft is not traversing the transition. For example, the FMS may monitor a position of the aircraft (e.g., based on information obtained from the aircraft sensor system) and may determine that the transition is not active when the aircraft is not within a defined airspace or path associated with the transition (e.g., as indicated by the lateral trajectory profile). Thus, the FMS may not perform one or more operations described herein in association with Fig. 1E and reference number 112 and Fig. 1D and reference number 114, but, instead, may perform one or more operations described herein in association with Fig. 1K and reference number 124.

In some implementations, as further shown in Fig. 1E, and by reference number 112, the FMS determines that the leg is active (or is still active) (e.g., after performing the update to the lateral trajectory profile to lock the bank angle parameter). That is, the FMS may determine that the aircraft is traversing a portion of the transition that is associated with the leg, and has not yet crossed a leg sequence point associated with the transition. For example, the FMS may monitor a position of the aircraft (e.g., based on information obtained from the aircraft sensor system) and may determine that the leg is active when the aircraft is within a defined airspace or path associated with the leg (e.g., as indicated by the lateral trajectory profile) and has not crossed the leg sequence point.

Accordingly, in some implementations, the FMS may determine that the transition is active and that the leg is active (e.g., both the transition and the leg are active). For example, the FMS may determine that the transition is active and that the leg is active when the aircraft enters a defined airspace or path associated with the transition and when the aircraft is within a defined airspace or path associated with the leg.

In some implementations, as shown in Fig. 1F, and by reference number 114, the FMS performs an update to the lateral trajectory profile (e.g., based on at least one of determining that the transition is active or determining that the leg is active, as described herein in relation to Figs. 1E and reference numbers 110 and 112). The FMS may perform the update to the lateral trajectory profile to lock the ground speed parameter, such as to a particular ground speed value. The particular ground speed value may be, for example, an established ground speed value (e.g., a particular ground speed value at which the ground speed has been set at the time of updating the lateral trajectory profile), which may have been set by the FMS. The FMS may perform the update to lock the ground speed parameter to the particular ground speed value until the leg is no longer active (e.g., to prevent updates to the ground speed parameter until the leg is no longer active).

In some implementations, performing the update to the lateral trajectory profile to lock the ground speed parameter to the particular ground speed value causes the ground speed of the aircraft to be locked at the particular ground speed value (e.g., as indicated by the locked ground speed parameter), such as until the leg is no longer active. For example, performing the update to the lateral trajectory profile may cause the FMS to set and maintain the ground speed of the aircraft at the particular ground speed value (e.g., until the leg is no longer active).

Accordingly, in some implementations, when the bank angle parameter and the ground speed parameter are both locked, the FMS determines a turn radius of the transition (e.g., based on the bank angle parameter and the ground speed parameter). Because the bank angle parameter and the ground speed parameter are locked until the leg is no longer active (e.g., until the aircraft passes the leg sequence point of the transition that is associated with the leg), the turn radius of the transition is fixed (e.g., does not deviate) while the leg is active. Further, as described elsewhere herein, the FMS may cause, while the leg is active, the bank angle of the aircraft to be locked at the particular bank angle value (e.g., as indicated by the bank angle parameter) and/or the ground speed of the aircraft to be locked at the particular ground speed value (e.g., as indicated by the ground speed parameter) to ensure that the aircraft travels along the fixed turn radius of the transition.

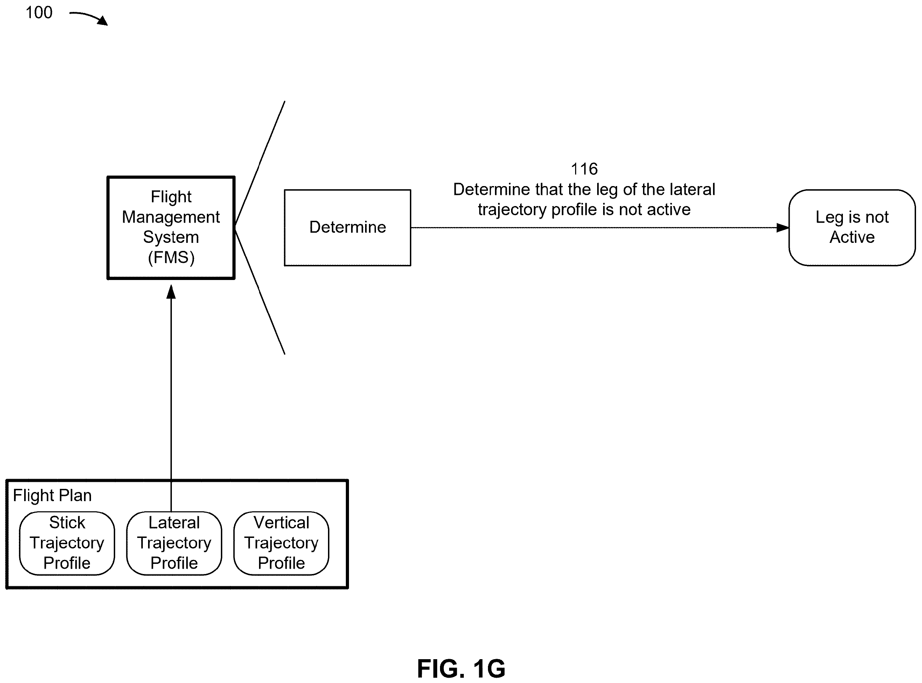

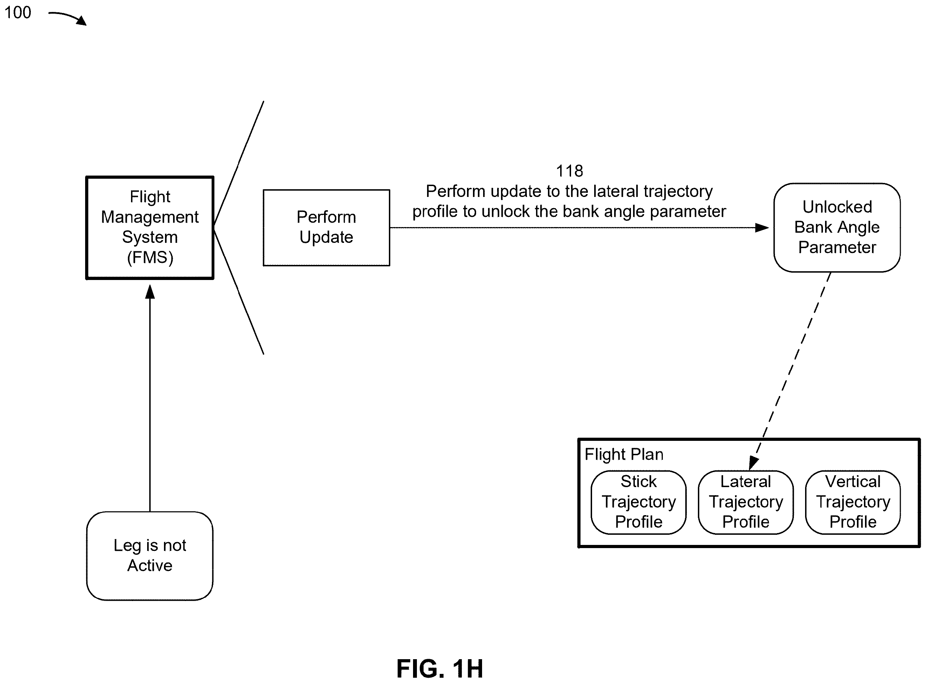

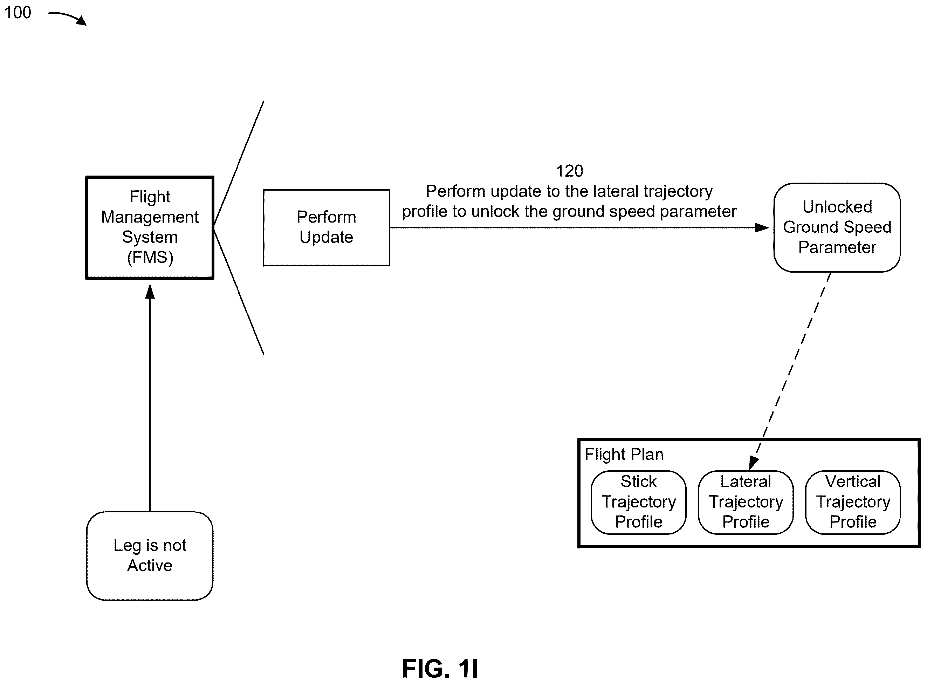

In some implementations, as shown in Fig. 1G, and by reference number 116, the FMS determines that the leg of the lateral trajectory profile is not active (or is no longer active) (e.g., after performing the update to the lateral trajectory profile to lock the bank angle parameter and/or the ground speed parameter). That is, the FMS may determine that the aircraft is not traversing (or is no longer traversing) the leg and/or has crossed the leg sequence point associated with the transition. For example, the FMS may monitor a position of the aircraft (e.g., based on information obtained from the aircraft sensor system) and may determine that the leg is not active when the aircraft is not within a defined airspace or path associated with the leg (e.g., as indicated by the lateral trajectory profile) and/or has crossed the leg sequence point. The FMS therefore may perform one or more operations described herein in association with Figs. 1H and 1I.

In some implementations, as shown in Fig. 1H, and by reference number 118, the FMS performs an update to the lateral trajectory profile (e.g., based on determining that the leg of the lateral trajectory profile is not active, as described herein in relation to Fig. 1G and reference number 116). The FMS may perform the update to the lateral trajectory profile to unlock the bank angle parameter. This enables setting the bank angle parameter to another particular bank angle value, such as in a similar manner as that described herein in relation to Fig. 1J.

In some implementations, performing the update to the lateral trajectory profile to unlock the bank angle parameter causes the bank angle of the aircraft to cease being locked at the particular bank angle value. For example, performing the update to the lateral trajectory profile may cause the FMS to set the bank angle to another particular bank angle value.

In some implementations, as shown in Fig. 1I, and by reference number 120, the FMS performs an update to the lateral trajectory profile (e.g., based on determining that the leg of the lateral trajectory profile is not active, as described herein in relation to Fig. 1G and reference number 116). The FMS may perform the update to the lateral trajectory profile to unlock the ground speed parameter. This enables setting the ground speed parameter to another particular ground speed value, such as in a similar manner as that described herein in relation to Fig. 1J.

In some implementations, performing the update to the lateral trajectory profile to unlock the ground speed parameter causes the ground speed of the aircraft to cease being locked at the particular ground speed value. For example, performing the update to the lateral trajectory profile may cause the FMS to set the ground speed to another particular ground speed value.

In some implementations, as shown in Fig. 1J, and by reference number 122, the FMS performs an update to the lateral trajectory profile (e.g., based on determining that the lateral distance threshold is not satisfied, as described herein in relation to Fig. 1C and reference number 106, and/or based on performing an update to the lateral trajectory profile to unlock the bank angle parameter, as described herein in relation to Fig. 1H and reference number 118). The FMS may perform the update to the lateral trajectory profile to indicate that the bank angle parameter is to be dynamically computed.

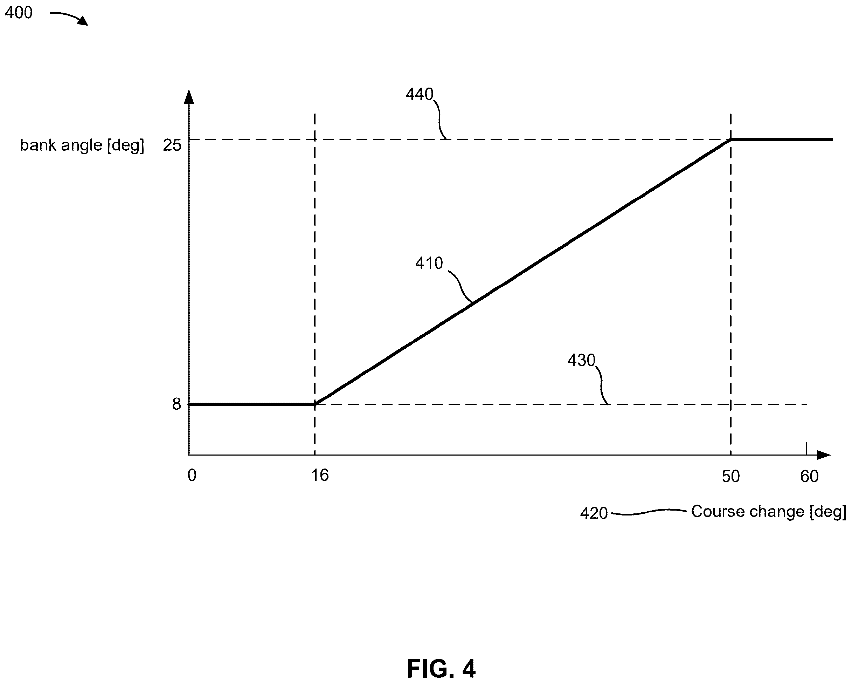

In some implementations, performing the update to the lateral trajectory profile to indicate that the bank angle parameter is to be dynamically computed causes the FMS to dynamically compute another particular bank angle value. For example, the FMS may determine the other particular bank angle value based on a roll limit associated with the aircraft and the course change associated with the leg and the other leg (e.g., after the leg is no longer active), as further described herein in relation to Fig. 4. The FMS then may perform an update to the lateral trajectory profile to set the bank angle parameter to the other particular bank angle value. Performing the update to the lateral trajectory profile to set the bank angle parameter to the other particular bank angle value may cause the bank angle of the aircraft to be set to the other particular bank angle value. For example, performing the update to the lateral trajectory profile may cause the FMS to set the bank angle to the other particular bank angle value.

In some implementations, as shown in Fig. 1K, and by reference number 124, the FMS performs an update to the lateral trajectory profile (e.g., based on determining that the transition is not active, as described herein in relation to Fig. 1D and reference number 110, and/or based on performing an update to the lateral trajectory profile to unlock the ground speed parameter, as described herein in relation to Fig. 1I and reference number 120). The FMS may perform the update to the lateral trajectory profile to indicate that the ground speed parameter is to be dynamically computed.

In some implementations, performing the update to the lateral trajectory profile to indicate that the ground speed parameter is to be dynamically computed causes the FMS to dynamically compute another particular ground speed value. For example, the FMS may determine the other particular ground speed value based on the vertical trajectory profile associated with the flight plan. The FMS then may perform an update to the lateral trajectory profile to set the ground speed parameter to the other particular ground speed value. Performing the update to the lateral trajectory profile to set the ground speed parameter to the other particular ground speed value may cause the ground speed of the aircraft to be set to the other particular ground speed value. For example, performing the update to the lateral trajectory profile may cause the FMS to set the ground speed to the other particular ground speed value.

As indicated above, Figs. 1A-1K are provided as an example. Other examples may differ from what is described with regard to Figs. 1A-1K.

Fig. 2 is a diagram of an example environment 200 in which systems and/or methods described herein may be implemented. As shown in Fig. 2, environment 200 may include an aircraft 210, an FMS 220, and/or an aircraft sensor system 230. Devices of environment 200 may interconnect via wired connections, wireless connections, or a combination of wired and wireless connections.

The aircraft 210 includes any suitable vehicle and/or device capable of flight. The aircraft 210 may include, for example, an airplane (e.g., a jet airplane, a propeller airplane, a glider airplane, or the like), a helicopter, an unmanned or uncrewed aerial vehicle (UAV), a drone, a rocketship, a spaceship, a space shuttle, an airship, or a blimp, along with other examples of aerial vehicles and/or aerial devices capable of flight.

The FMS 220 includes one or more devices capable of receiving, generating, storing, transmitting, processing, and/or providing information, as described elsewhere herein. The FMS 220 may include one or more devices, such as a flight management computer (FMC), a control display unit (CDU), and/or other devices that automate one or more of flight planning, navigation, and operational tasks of the aircraft 210. The FMS 220 may be configured to generate, store, and/or update a flight plan (e.g., that comprises a stick trajectory profile, a lateral trajectory profile, and a vertical trajectory profile), as described elsewhere herein. The FMS 220 may be configured to guide or otherwise control the aircraft 210 in accordance with the flight plan.

The aircraft sensor system 230 includes one or more devices capable of receiving, generating, storing, transmitting, processing, detecting, and/or providing information, as described elsewhere herein. The aircraft sensor system 230 may include one or more sensors, or other devices, that are configured to monitor, measure, and report information related to an operation, environment, and/or performance of the aircraft 210. For example, the aircraft sensor system 230 may include one or more sensors, or other devices, for detecting an airspeed, a ground speed, an altitude, an attitude, a position, a bank angle, an acceleration, one or more engine performance parameters, and/or other information associated with the aircraft. The aircraft sensor system 230 may be configured to sense or detect a condition or information and transmit, using a wired or wireless communication interface, an indication of the detected condition or information to the FMS 220 (e.g., in real-time, or near-real time).

The number and arrangement of devices and networks shown in Fig. 2 are provided as an example. In practice, there may be additional devices and/or networks, fewer devices and/or networks, different devices and/or networks, or differently arranged devices and/or networks than those shown in Fig. 2. Furthermore, two or more devices shown in Fig. 2 may be implemented within a single device, or a single device shown in Fig. 2 may be implemented as multiple, distributed devices. Additionally, or alternatively, a set of devices (e.g., one or more devices) of environment 200 may perform one or more functions described as being performed by another set of devices of environment 200.

Fig. 3 is a diagram of example components of a device 300 associated with locking a bank angle parameter and a ground speed parameter. The device 300 may correspond to the aircraft 210, the FMS 220, and/or the aircraft sensor system 230. In some implementations, the aircraft 210, the FMS 220, and/or the aircraft sensor system 230 may include one or more devices 300 and/or one or more components of the device 300. As shown in Fig. 3, the device 300 may include a bus 310, a processor 320, a memory 330, an input component 340, an output component 350, and/or a communication component 360.

The bus 310 may include one or more components that enable wired and/or wireless communication among the components of the device 300. The bus 310 may couple together two or more components of Fig. 3, such as via operative coupling, communicative coupling, electronic coupling, and/or electric coupling. For example, the bus 310 may include an electrical connection (e.g., a wire, a trace, and/or a lead) and/or a wireless bus. The processor 320 may include a central processing unit, a graphics processing unit, a microprocessor, a controller, a microcontroller, a digital signal processor, a field-programmable gate array, an application-specific integrated circuit, and/or another type of processing component. The processor 320 may be implemented in hardware, firmware, or a combination of hardware and software. In some implementations, the processor 320 may include one or more processors capable of being programmed to perform one or more operations or processes described elsewhere herein.

The memory 330 may include volatile and/or nonvolatile memory. For example, the memory 330 may include random access memory (RAM), read only memory (ROM), a hard disk drive, and/or another type of memory (e.g., a flash memory, a magnetic memory, and/or an optical memory). The memory 330 may include internal memory (e.g., RAM, ROM, or a hard disk drive) and/or removable memory (e.g., removable via a universal serial bus connection). The memory 330 may be a non-transitory computer-readable medium. The memory 330 may store information, one or more instructions, and/or software (e.g., one or more software applications) related to the operation of the device 300. In some implementations, the memory 330 may include one or more memories that are coupled (e.g., communicatively coupled) to one or more processors (e.g., processor 320), such as via the bus 310. Communicative coupling between a processor 320 and a memory 330 may enable the processor 320 to read and/or process information stored in the memory 330 and/or to store information in the memory 330.

The input component 340 may enable the device 300 to receive input, such as user input and/or sensed input. For example, the input component 340 may include a touch screen, a keyboard, a keypad, a mouse, a button, a microphone, a switch, a sensor, a global positioning system sensor, a global navigation satellite system sensor, an accelerometer, a gyroscope, and/or an actuator. The output component 350 may enable the device 300 to provide output, such as via a display, a speaker, and/or a light-emitting diode. The communication component 360 may enable the device 300 to communicate with other devices via a wired connection and/or a wireless connection. For example, the communication component 360 may include a receiver, a transmitter, a transceiver, a modem, a network interface card, and/or an antenna.

The device 300 may perform one or more operations or processes described herein. For example, a non-transitory computer-readable medium (e.g., memory 330) may store a set of instructions (e.g., one or more instructions or code) for execution by the processor 320. The processor 320 may execute the set of instructions to perform one or more operations or processes described herein. In some implementations, execution of the set of instructions, by one or more processors 320, causes the one or more processors 320 and/or the device 300 to perform one or more operations or processes described herein. In some implementations, hardwired circuitry may be used instead of or in combination with the instructions to perform one or more operations or processes described herein. Additionally, or alternatively, the processor 320 may be configured to perform one or more operations or processes described herein. Thus, implementations described herein are not limited to any specific combination of hardware circuitry and software.

The number and arrangement of components shown in Fig. 3 are provided as an example. The device 300 may include additional components, fewer components, different components, or differently arranged components than those shown in Fig. 3. Additionally, or alternatively, a set of components (e.g., one or more components) of the device 300 may perform one or more functions described as being performed by another set of components of the device 300.

Fig. 4 is an example plot 400 associated with dynamically computing a bank angle parameter. As described herein in relation to Fig. 1J, and reference number 122, the FMS may perform an update to a lateral trajectory profile of a flight plan to indicate that the bank angle parameter is to be dynamically computed. This then causes the FMS to dynamically compute a particular bank angle value 410, to which the bank angle parameter is to be set. For example, the FMS may determine the particular bank angle value 410 based on a roll limit associated with the aircraft and a course change associated with a transition from a leg to another leg (e.g., as indicated by the lateral trajectory profile). The FMS may compute the particular bank angle value 410 as one half of an angle associated with the course change 420, between a minimum bank angle 430 and a maximum bank angle 440 of the roll limit. Accordingly, as shown with respect to the example plot 400, the FMS may determine the particular bank angle value 410 to be 8 degrees (e.g., when the minimum bank angle 430 of the roll limit is 8 degrees) when the angle associated with the course change 420 is less than 16 degrees, to be one half of the angle associated with the course change 420 when the angle associated with the course change 420 is greater than or equal to 16 degrees and less than or equal to 50 degrees, or to be 25 degrees when the angle associated with the course change 420 is greater than 50 degrees.

As indicated above, Fig. 4 is provided as an example. Other examples may differ from what is described with regard to Fig. 4.

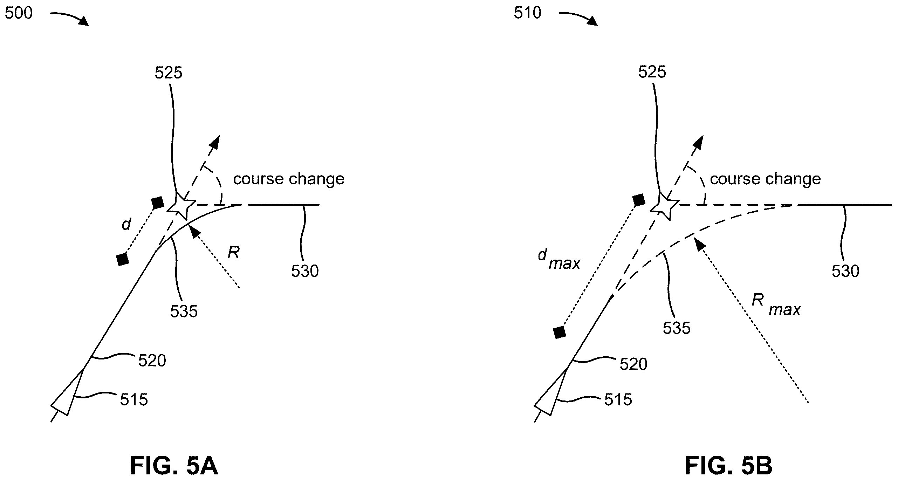

Figs. 5A and 5B are diagrams of example implementations 500 and 510, respectively, that are associated with an FMS of an aircraft determining a turn anticipation distance for a transition between a leg and another leg (e.g., as indicated by a lateral trajectory profile of a flight plan). As shown in Figs. 5A-5B, an aircraft 515 traverses a leg 520 that has an end waypoint 525. The leg 520 and the end waypoint 525 are be associated with another leg 530 and a transition 535 from the leg 520 to the other leg 530.

Accordingly, as shown in Fig. 5A, an FMS of the aircraft 515 determines a turn anticipation distance d based on a course change associated with the leg 520 and the other leg 530 to allow the transition 535 to have a turn radius R. The turn anticipation distance d may be indicated by the following:

$$d = abs(R) \cdot \tan(\frac{abs(courseChange)}{2})$$

where R is the turn radius for the transition 535, and *courseChange* indicates a change in heading of the aircraft 515 in association with transitioning from the leg 520 to the other leg 530.

In some implementations, the turn radius of the transition can be maximized to ensure a smoother transition from the leg 520 to the other leg 530. For example, the FMS of the aircraft 515 determines a maximum turn radius $R_{max}$ based on a ground speed of the aircraft 515 and a minimum allowable bank angle of the aircraft 515. The maximum turn radius $R_{max}$ for the transition may be indicated by the following:

$$R_{max} = \frac{V^2}{g \cdot \tan(\phi_{min})}$$

where $V$ is the ground speed of the aircraft 515, $g$ is the gravity constant, and $\phi_{min}$ is the minimum allowable bank angle of the aircraft 515 (e.g., as indicated by the lateral trajectory profile), such as 8 degrees.

Accordingly, as shown in Fig. 5B, the FMS of the aircraft 515 determines a maximum turn anticipation distance $d_{max}$ based on the course change associated with the leg 520 and the other leg 530 to allow the transition to have the maximum turn radius $R_{max}$. The maximum turn anticipation distance $d_{max}$ may be indicated by the following:

$$d_{max} = abs(R_{max}) \cdot \tan(\frac{abs(courseChange)}{2}),$$

where $R_{max}$ is the maximum turn radius for the transition 535 and *courseChange* indicates the change in heading of the aircraft 515 in association with transitioning from the leg 520 to the other leg 530.

In some implementations, the lateral distance threshold (e.g., that is determined by the FMS, as described herein in relation to Fig. 1A and reference number 102) is the maximum turn anticipation distance $d_{max}$. Accordingly, the FMS may perform an update to the lateral trajectory profile to lock a bank angle parameter when the lateral distance between the aircraft 515 and the end waypoint 525 satisfies (e.g., is less than or equal to) the lateral distance threshold (e.g., the maximum turn anticipation distance $d_{max}$), as described herein in relation to Fig. 1D and reference number 108, such as to enable the transition to have the maximum turn radius $R_{max}$.

As indicated above, Figs. 5A-5B are provided as an example. Other examples may differ from what is described with regard to Figs. 5A-5B.

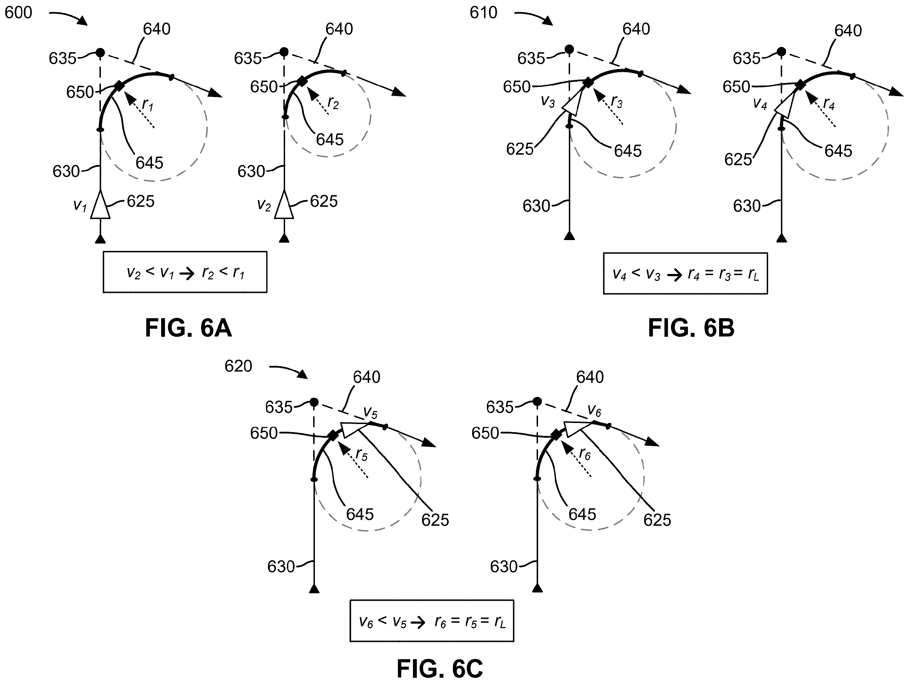

Figs. 6A, 6B, and 6C are diagrams of example implementations 600, 610, and 620, respectively, that are associated with a ground speed of an aircraft and a turn radius of a transition between a leg and another leg (e.g., as indicated by a lateral trajectory profile of a flight plan). As shown in Figs. 6A-6C, an aircraft 625 is associated with a leg 630 that has an end waypoint 635. The leg 630 and the end waypoint 635 are associated with another leg 640 and a transition 645 between the leg 630 and the other leg 640. A leg sequence point 650 is associated with the transition 645.

As shown in Fig. 6A, at a first instant in time, the aircraft 625 traverses the leg 630 at a ground speed with a ground speed value $v_1$. Because the aircraft 625 has not yet traversed the transition 645, an FMS of the aircraft 625 uses the ground speed value $v_1$ to determine a turn radius of the transition 645 to be $r_1$. At a second instant in time, after the first instant in time, the ground speed value decreases from $v_1$ to $v_2$. Accordingly, because the aircraft 625 has still not yet traversed the transition 645, the FMS of the aircraft 625 uses the ground speed value $v_2$ to determine the turn radius of the transition 645 to be $r_2$. Further, because the ground speed of the aircraft 625 has decreased, $r_2$ is less than $r_1$.

As shown in Fig. 6B, at a third instant in time, the leg 630 is still active and the aircraft 625 traverses the transition 645 at a ground speed with a ground speed value $v_3$. Because the leg 630 and the transition 645 are both active, the FMS of the aircraft 625 uses a locked ground speed value $v_L$ (e.g., as indicated by a locked ground speed parameter of the lateral trajectory profile) to determine the turn radius of the transition 645 to be $r_3$, which is equal to a locked turn radius $r_L$. At a fourth instant in time, after the third instant in time, the ground speed value decreases from $v_3$ to $v_4$. Accordingly, because the leg 630 and the transition 645 are both still active, the FMS continues to use the locked ground speed value $v_L$ (e.g., as indicated by the locked ground speed parameter of the lateral trajectory profile) to determine the turn radius of the transition 645 to be $r_4$, which is equal to a locked turn radius $r_L$. Thus, the turn radius of the transition 645 does not change, regardless of the change to the ground speed of the aircraft 625.

As shown in Fig. 6C, at a fifth instant in time, the leg 630 is no longer active and the aircraft 625 traverses the transition 645 at a ground speed with a ground speed value $v_5$. Because the leg 630 is no longer active, the FMS of the aircraft 625 does not update the turn radius $r_L$ of the transition 645 (e.g., because the aircraft 625 is, or is about to, traverse the leg 640). At a sixth instant in time, after the fifth instant in time, the ground speed value decreases from $v_5$ to $v_6$. Accordingly, because the transition 645 is still active and the leg 630 is still not active, the FMS continues to not update the turn radius $r_L$ of the transition 645 (e.g., because the aircraft 625 is, or is about to, traverse the leg 640). Thus, the turn radius of the transition 645 does not change, regardless of the change to the ground speed of the aircraft 625.

As indicated above, Figs. 6A-6C are provided as an example. Other examples may differ from what is described with regard to Figs. 6A-6C.

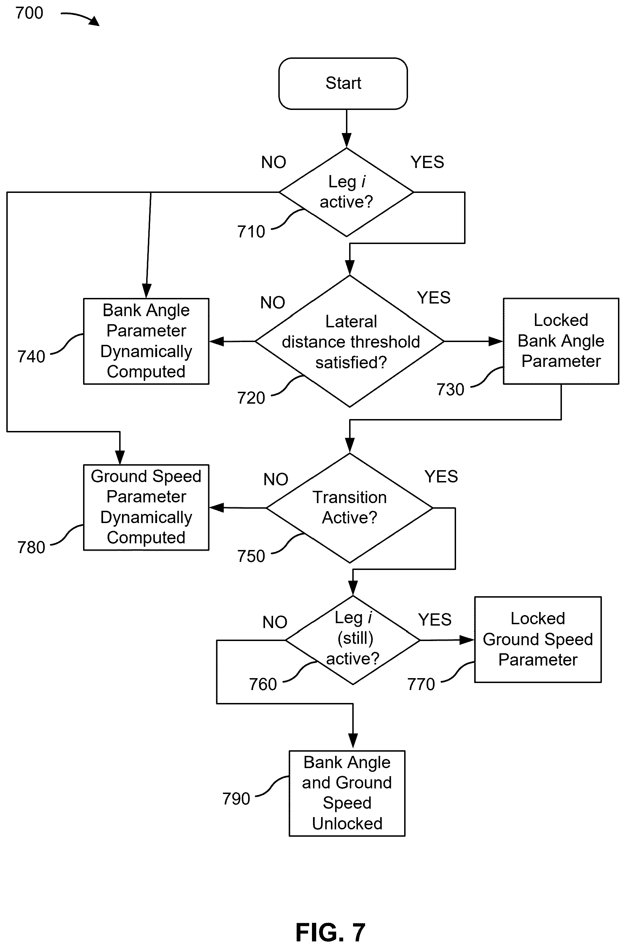

Fig. 7 is a flowchart of an example process 700 associated with locking a bank angle parameter and a ground speed parameter. In some implementations, one or more operations of Fig. 7 are performed by an FMS (e.g., the FMS 220) of an aircraft (e.g., the aircraft 210). In some implementations, one or more operations of Fig. 7 are performed by another device or a group of devices separate from or including the FMS, such as an aircraft sensor system (e.g., the aircraft sensor system 230) of the aircraft. Additionally, or alternatively, one or more operations of Fig. 7 may be performed by one or more components of device 300, such as processor 320, memory 330, input component 340, output component 350, and/or communication component 360.

As shown in Fig. 7, process 700 includes determining whether a leg of a lateral trajectory profile associated with a flight plan for the aircraft is active (operation 710). For example, the FMS may determine whether a leg of a lateral profile associated with a flight plan for the aircraft is active, such as in a similar manner as that described herein in relation to Fig. 1A and reference number 102. When the FMS determines that the leg is active, process 700 then may include performing operation 720. Alternatively, when the FMS determines that the leg is not active, process 700 then may include performing operations 740 and 780 (and may not include performing any other operations described herein). In this way, the FMS may selectively perform one of operation 720 (e.g., based on determining that the leg is active) or operations 740 and 780 (e.g., based on determining that the leg is not active).

As shown in Fig. 7, process 700 includes determining whether a lateral distance threshold is satisfied (operation 720). For example, the FMS may determine whether a lateral distance between the aircraft and an end waypoint of the leg satisfies a lateral distance threshold associated with the end waypoint, such as in a similar manner as that described herein in relation to Fig. 1C and reference number 106. When the FMS determines that the lateral distance satisfies the lateral distance threshold, process 700 then may include performing operation 730. Alternatively, when the FMS determines that the lateral distance does not satisfy the lateral distance threshold, process 700 then may include performing operation 740 (and may not include performing any other operations described herein). In this way, the FMS may selectively perform one of operation 730 (e.g., based on determining that the lateral distance satisfies the lateral distance threshold) or operation 740 (e.g., based on determining that the lateral distance does not satisfy the lateral distance threshold).

As shown in Fig. 7, process 700 includes performing an update to the lateral trajectory profile to lock a bank angle parameter (operation 730). For example, the FMS may perform an update (e.g., a first update) to the lateral trajectory profile to lock a bank angle parameter to a particular bank angle value, such as in a similar manner as that described herein in relation to Fig. 1D and reference number 108. Process 700 then may include performing operation 750.

As shown in Fig. 7, process 700 includes performing an update to the lateral trajectory profile to cause the lateral trajectory profile to indicate that the bank angle parameter is to be dynamically computed (operation 740). For example, the FMS may perform an update (e.g., a second update) to the lateral trajectory profile to cause the lateral trajectory profile to indicate that the bank angle parameter is to be dynamically computed, such as in a similar manner as that described herein in relation to Fig. 1J and reference number 122. This may cause the FMS to dynamically compute another particular bank angle value and to perform an update to the lateral trajectory profile to set the bank angle parameter to the other particular bank angle value.

As shown in Fig. 7, process 700 includes determining whether a transition, which is associated with the end waypoint, is active (operation 750). For example, the FMS may determine whether a transition, which is associated with the end waypoint, is active, such as in a similar manner as that described herein in relation to Fig. 1E and reference number 110. When the FMS determines that the transition is active, process 700 then may include performing operation 750 (or performing operation 770, and not performing operation 750). Alternatively, when the FMS determines that the transition is not active, process 700 then may include performing operation 780 (and may not include performing any other operations described herein). In this way, the FMS may selectively perform one of operation 750 (or operation 770) (e.g., based on determining that the transition is active) or operation 780 (e.g., based on determining that the transition is not active).

As shown in Fig. 7, process 700 includes determining whether the leg is (still) active (operation 760). For example, the FMS may determine whether the leg is (still) active, such as in a similar manner as that described herein in relation to Fig. 1E and reference number 112 and Fig. 1G and reference number 116. When the FMS determines that the leg is (still) active, process 700 then may include performing operation 770. Alternatively, when the FMS determines that the leg is not active (or is no longer active), process 700 then may include performing operation 790 (and may not include performing any other operations described herein). In this way, the FMS may selectively perform one of operation 770 (e.g., based on determining that the leg is (still) active) or operation 790 (e.g., based on determining that the leg is not active).

As shown in Fig. 7, process 700 includes performing an update to the lateral trajectory profile to lock a ground speed parameter to a particular ground speed value (operation 770). For example, the FMS may perform an update (e.g., a third update) to the lateral trajectory lock a ground speed parameter to a particular ground speed value, such as in a similar manner as that described herein in relation to Fig. 1F and reference number 114.

As shown in Fig. 7, process 700 includes performing an update to the lateral trajectory profile to cause the lateral trajectory profile to indicate that the ground speed parameter is to be dynamically computed (operation 780). For example, the FMS may perform an update (e.g., a fourth update) to the lateral trajectory profile to cause the lateral trajectory profile to indicate that the ground speed parameter is to be dynamically computed, such as in a similar manner as that described herein in relation to Fig. 1K and reference number 124. This may cause the FMS to dynamically compute another particular ground speed value and to perform an update to the lateral trajectory profile to set the ground speed parameter to the other particular bank angle value.

As shown in Fig. 7, process 700 includes performing an update to the lateral trajectory profile to cause the lateral trajectory profile to unlock the particular bank angle parameter and to unlock the particular ground speed parameter (operation 790). For example, the FMS may perform an update (e.g., a fifth update) to the lateral trajectory profile to cause the lateral trajectory profile to unlock the particular bank angle parameter and to unlock the particular ground speed parameter, such as in a similar manner as that described herein in relation to Fig. 1H and reference number 118, and to Fig. 1I and reference number 120.

Although Fig. 7 shows example operations of process 700, in some implementations, process 700 includes additional operations, fewer operations, different operations, or differently arranged operations than those depicted in Fig. 7. Additionally, or alternatively, two or more of the operations of process 700 may be performed in parallel.

In some implementations, the process 700, or one or more portions of the process 700, may be performed iteratively. In this way, the FMS may perform one or more other updates (e.g., a sixth update, a seventh update, and so on) to the lateral trajectory profile to lock and unlock the bank angle parameter and the ground speed parameter in relation to other legs and transitions of the lateral trajectory profile.

As used herein, the term "component" is intended to be broadly construed as hardware, firmware, and/or a combination of hardware and software. It will be apparent that systems and/or methods described herein may be implemented in different forms of hardware, firmware, or a combination of hardware and software. The actual specialized control hardware or software code used to implement these systems and/or methods is not limiting of the implementations described herein. Thus, the operation and behavior of the systems and/or methods are described herein without reference to specific software code-it being understood that software and hardware can be designed to implement the systems and/or methods based on the description herein.

As used herein, satisfying a threshold may, depending on the context, refer to a value being greater than the threshold, greater than or equal to the threshold, less than the threshold, less than or equal to the threshold, equal to the threshold, not equal to the threshold, or the like.

As used herein, "selectively" performing an operation means to either perform the operation or refrain from performing the operation. For example, selectively performing an operation based on whether a condition is satisfied means that the operation is performed if the condition is satisfied and that the operation is not performed if the condition is not satisfied (or vice versa). Thus, selectively performing an operation may include determining whether to perform the operation and then either performing the operation or refraining from performing the operation based on that determination.

Even though particular combinations of features are recited in the claims and/or described in the specification, these combinations are not intended to limit the implementations described herein. In fact, many of these features may be combined in ways not specifically recited in the claims and/or described in the specification. Although each dependent claim listed below may directly depend on only one claim, the description includes each dependent claim in combination with every other claim in the claim set. As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiple of the same item.

When "a component" or "one or more components" (or another element, such as "a processor" or "one or more processors") is described or claimed (within a single claim or across multiple claims) as performing multiple operations or being configured to perform multiple operations, this language is intended to broadly cover a variety of architectures and environments. For example, unless explicitly claimed otherwise (e.g., via the use of "first component" and "second component" or other language that differentiates components in the claims), this language is intended to cover a single component performing or being configured to perform all of the operations, a group of components collectively performing or being configured to perform all of the operations, a first component performing or being configured to perform a first operation and a second component performing or being configured to perform a second operation, or any combination of components performing or being configured to perform the operations. For example, when a claim has the form "one or more components configured to: perform X; perform Y; and perform Z," that claim should be interpreted to mean "one or more components configured to perform X; one or more (possibly different) components configured to perform Y; and one or more (also possibly different) components configured to perform Z."

No element, act, or instruction used herein should be construed as critical or essential unless explicitly described as such. Also, as used herein, the articles "a" and "an" are intended to include one or more items, and may be used interchangeably with "one or more." Further, as used herein, the article "the" is intended to include one or more items referenced in connection with the article "the" and may be used interchangeably with "the one or more." Furthermore, as used herein, the term "set" is intended to include one or more items (e.g., related items, unrelated items, or a combination of related and unrelated items,), and may be used interchangeably with "one or more." Where only one item is intended, the phrase "only one" or similar language is used. Also, as used herein, the terms "has," "have," "having," or the like are intended to be openended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of").

The following aspects form part of the disclosure:
A flight management system (FMS) of an aircraft, comprising: one or more memories; and one or more processors, communicatively coupled to the one or more memories, configured to: determine that a leg of a lateral trajectory profile, which is associated with a flight plan for the aircraft, is active; determine, based on determining that the leg of the lateral trajectory profile is active, that a lateral distance between the aircraft and an end waypoint associated with the leg satisfies a lateral distance threshold; perform, based on determining that the lateral distance satisfies the lateral distance threshold, an update to the lateral trajectory profile to lock a bank angle parameter to a particular bank angle value; determine that a transition, which is associated with the end waypoint and another leg of the lateral trajectory profile, is active and that the leg is active; and perform, based on determining that the transition is active and that the leg is active, an update to the lateral trajectory profile to lock a ground speed parameter to a particular ground speed value.

The one or more processors may further be configured to: determine, based on the bank angle parameter and the ground speed parameter, a turn radius of the transition that is to be fixed until the leg is no longer active.

The one or more processors may further be configured to: determine that the leg of the lateral trajectory profile is no longer active; and perform, based on determining that the leg of the lateral trajectory profile is no longer active, an update to the lateral trajectory profile to unlock the bank angle parameter and to unlock the ground speed parameter.

The one or more processors may further be configured to: determine, after performing the update to the lateral trajectory profile to unlock the bank angle parameter and to unlock the ground speed parameter, and based on a roll limit associated with the aircraft and a course change associated with the leg and the other leg, another particular bank angle value; and perform an update to the lateral trajectory profile to set the bank angle parameter to the other particular bank angle value.

The one or more processors may further be configured to: determine, after performing the update to the lateral trajectory profile to unlock the bank angle parameter and to unlock the ground speed parameter, and based on a vertical trajectory profile associated with the flight plan, another particular ground speed value; and perform an update to the lateral trajectory profile to set the ground speed parameter to the other particular ground speed value.

The one or more processors may further be configured to: determine, based on determining that the leg of the lateral trajectory profile is active, the lateral distance threshold associated with the end waypoint of the leg.

The one or more processors, to determine the lateral distance threshold, may be configured to: identify, based on determining that the leg of the lateral trajectory profile is active, a minimum bank angle value associated with the lateral trajectory profile; identify, based on determining that the leg of the lateral trajectory profile is active, that a ground speed of the aircraft has an established ground speed value; determine, based on the minimum bank angle value and the established ground speed value, a maximum radius for the transition; and determine, based on the maximum radius and a course change associated with the leg and the other leg, the lateral distance threshold.

A non-transitory computer-readable medium storing a set of instructions, the set of instructions comprising: one or more instructions that, when executed by one or more processors of a flight management system (FMS) of an aircraft, cause the FMS to: determine that a leg of a lateral trajectory profile, which is associated with a flight plan for the aircraft, is active; determine, based on determining that the leg of the lateral trajectory profile is active, a lateral distance threshold associated with an end waypoint of the leg; determine whether a lateral distance between the aircraft and the end waypoint satisfies the lateral distance threshold; and selectively perform one of: a first update to the lateral trajectory profile, based on determining that the lateral distance satisfies the lateral distance threshold, to lock a bank angle parameter to a particular bank angle value at which a bank angle of the aircraft has been set, or a second update to the lateral trajectory profile, based on determining that the lateral distance does not satisfy the lateral distance threshold, to set the bank angle parameter to another bank angle value.

The one or more instructions, when executed by the one or more processors, may further cause the FMS to: determine, after performing the first update to the lateral trajectory profile, that the leg of the lateral trajectory profile is no longer active; and perform, based on determining that the leg of the lateral trajectory profile is no longer active, a third update to the lateral trajectory profile to unlock the bank angle parameter.

The one or more instructions, when executed by the one or more processors, may further cause the FMS to: determine, after performing the first update to the lateral trajectory profile, whether a transition, which is associated with the end waypoint, is active; and selectively perform one of: a third update to the lateral trajectory profile, based on determining that the transition is active, to lock a ground speed parameter to a particular ground speed value at which a ground speed of the aircraft has been set, or a fourth update to the lateral trajectory profile, based on determining that the transition is not active, to set the ground speed parameter to another particular ground speed value.

The one or more instructions, that cause the FMS to perform the third update to the lateral trajectory profile, may cause the FMS to: determine, based on determining that the transition is active, that the leg is still active; and perform, based on determining that the leg is still active, the third update to the lateral trajectory profile.

The one or more instructions, that cause the FMS to perform the first update to the lateral trajectory profile, may cause the FMS to: cause a bank angle of the aircraft to be locked at the particular bank angle value until the leg is no longer active, based on the first update being performed; and wherein the one or more instructions, that cause the FMS to perform the third update to the lateral trajectory profile, may cause the FMS to: cause a ground speed of the aircraft to be locked at the particular ground speed value until the leg is no longer active, based on the third update being performed.

The one or more instructions, when executed by the one or more processors, may further cause the FMS to: determine, after performing the third update to the lateral trajectory profile, that the leg of the lateral trajectory profile is no longer active; and perform, based on determining that the leg of the lateral trajectory profile is no longer, a fifth update to the lateral trajectory profile to unlock the bank angle parameter and to unlock the ground speed parameter.

The one or more instructions, when executed by the one or more processors, may further cause the FMS to: perform, after performing the fifth update to the lateral trajectory profile, a sixth update to the lateral trajectory profile to set the bank angle parameter to another particular bank angle value.

The one or more instructions, when executed by the one or more processors, may further cause the FMS to: perform, after performing the fifth update to the lateral trajectory profile, a sixth update to the lateral trajectory profile to set the ground speed parameter to another particular ground speed value.

The one or more instructions, that cause the FMS to determine the lateral distance threshold, may cause the FMS to: determine, based on a minimum bank angle value associated with the lateral trajectory profile and a particular ground speed value at which a ground speed of the aircraft is established, a maximum radius for a transition associated with the end waypoint; and determine, based on the maximum radius, the lateral distance threshold.

Each of the causes resulting from the one or more instructions may be understood as one of more method steps.

A method, comprising the steps of: determining, by a flight management system (FMS) of an aircraft, based on determining that a leg of a lateral trajectory profile is active, whether a lateral distance between the aircraft and an end waypoint of the leg satisfies a lateral distance threshold; and selectively performing one of: a first update to the lateral trajectory profile, based on determining that the lateral distance satisfies the lateral distance threshold, to lock a bank angle parameter to a particular bank angle value, or a second update to the lateral trajectory profile, based on determining that the lateral distance does not satisfy the lateral distance threshold, to set the bank angle parameter to another bank angle value.

The method may further comprise the step of: performing, after performing the first update to the lateral trajectory profile and based on determining that the leg of the lateral trajectory profile is no longer active, a third update to the lateral trajectory profile to cause the lateral trajectory profile to unlock the bank angle parameter.

The method may further comprise the step of: selectively performing, after performing the first update to the lateral trajectory profile, one of: a third update to the lateral trajectory profile, based on determining that a transition associated with the end waypoint is active, to lock a ground speed parameter to a particular ground speed value, or a fourth update to the lateral trajectory profile, based on determining that the transition associated with the end waypoint is not active, to set the ground speed parameter to another particular ground speed value.

The method may further comprise the step of: performing, after performing the third update to the lateral trajectory profile and based on determining that the leg of the lateral trajectory profile is no longer active, a fifth update to the lateral trajectory profile to unlock the bank angle parameter and to unlock the ground speed parameter.

**Claims**

1. A flight management system, FMS (220), of an aircraft (210), comprising:

    one or more memories (330); and
    one or more processors (320), communicatively coupled to the one or more memories (330), configured to:

        determine that a leg of a lateral trajectory profile, which is associated with a flight plan for the aircraft (210), is active;
        determine, based on determining that the leg of the lateral trajectory profile is active, that a lateral distance between the aircraft (210) and an end waypoint associated with the leg satisfies a lateral distance threshold;
        perform, based on determining that the lateral distance satisfies the lateral distance threshold, an update to the lateral trajectory profile to lock a bank angle parameter to a particular bank angle value;
        determine that a transition, which is associated with the end waypoint and another leg of the lateral trajectory profile, is active and that the leg is active; and
        perform, based on determining that the transition is active and that the leg is active, an update to the lateral trajectory profile to lock a ground speed parameter to a particular ground speed value.

2. The FMS (220) of claim 1, wherein the one or more processors (320) are further configured to:
determine, based on the bank angle parameter and the ground speed parameter, a turn radius of the transition that is to be fixed until the leg is no longer active.

3. The FMS (220) of claim 1 or 2, wherein the one or more processors (320) are further configured to:

   determine that the leg of the lateral trajectory profile is no longer active; and
   perform, based on determining that the leg of the lateral trajectory profile is no longer active, an update to the lateral trajectory profile to unlock the bank angle parameter and to unlock the ground speed parameter.

4. The FMS (220) of any of claims 1 to 3, wherein the one or more processors (320) are further configured to:

   determine, after performing the update to the lateral trajectory profile to unlock the bank angle parameter and to unlock the ground speed parameter, and based on a roll limit associated with the aircraft (210) and a course change associated with the leg and the other leg, another particular bank angle value; and
   perform an update to the lateral trajectory profile to set the bank angle parameter to the other particular bank angle value.

5. The FMS (220) of any of claims 1 to 3, wherein the one or more processors (320) are further configured to:

   determine, after performing the update to the lateral trajectory profile to unlock the bank angle parameter and to unlock the ground speed parameter, and based on a vertical trajectory profile associated with the flight plan, another particular ground speed value; and
   perform an update to the lateral trajectory profile to set the ground speed parameter to the other particular ground speed value.

6. The FMS (220) of any preceding claim, wherein the one or more processors (320) are further configured to:
   determine, based on determining that the leg of the lateral trajectory profile is active, the lateral distance threshold associated with the end waypoint of the leg.

7. The FMS (220) of claim 6, wherein the one or more processors (320), to determine the lateral distance threshold, are configured to:

   identify, based on determining that the leg of the lateral trajectory profile is active, a minimum bank angle value associated with the lateral trajectory profile;
   identify, based on determining that the leg of the lateral trajectory profile is active, that a ground speed of the aircraft (210) has an established ground speed value;
   determine, based on the minimum bank angle value and the established ground speed value, a maximum radius for the transition; and
   determine, based on the maximum radius and a course change associated with the leg and the other leg, the lateral distance threshold.

8. A method, comprising:

   determining, by a flight management system, FMS (220), of an aircraft (210), based on determining that a leg of a lateral trajectory profile is active, whether a lateral distance between the aircraft (210) and an end waypoint of the leg satisfies a lateral distance threshold; and
   selectively performing one of:

      a first update to the lateral trajectory profile, based on determining that the lateral distance satisfies the lateral distance threshold, to lock a bank angle parameter to a particular bank angle value, or
      a second update to the lateral trajectory profile, based on determining that the lateral distance does not satisfy the lateral distance threshold, to set the bank angle parameter to another bank angle value.

9. The method of claim 8, further comprising:
   performing, after performing the first update to the lateral trajectory profile and based on determining that the leg of the lateral trajectory profile is no longer active, a third update to the lateral trajectory profile to cause the lateral trajectory profile to unlock the bank angle parameter.

10. The method of claim 8 or 9, further comprising:
    selectively performing, after performing the first update to the lateral trajectory profile, one of:

a third update to the lateral trajectory profile, based on determining that a transition associated with the end waypoint is active, to lock a ground speed parameter to a particular ground speed value, or

a fourth update to the lateral trajectory profile, based on determining that the transition associated with the end waypoint is not active, to set the ground speed parameter to another particular ground speed value.

11. The method of claim 10, further comprising:
performing, after performing the third update to the lateral trajectory profile and based on determining that the leg of the lateral trajectory profile is no longer active, a fifth update to the lateral trajectory profile to unlock the bank angle parameter and to unlock the ground speed parameter.

12. The method of claim 10 or 11, wherein performing the third update to the lateral trajectory profile comprises:

determining, based on determining that the transition is active, that the leg is still active; and
performing, based on determining that the leg is still active, the third update to the lateral trajectory profile.

13. The method of any of claims 10 to 12,
wherein performing the first update to the lateral trajectory profile, comprises:

causing a bank angle of the aircraft (210) to be locked at the particular bank angle value until the leg is no longer active, based on the first update being performed; and wherein performing the third update to the lateral trajectory profile, comprises:
causing a ground speed of the aircraft (210) to be locked at the particular ground speed value until the leg is no longer active, based on the third update being performed.

14. The method of any of claims 10 to 13, further comprising:

determining, after performing the third update to the lateral trajectory profile, that the leg of the lateral trajectory profile is no longer active; and
performing, based on determining that the leg of the lateral trajectory profile is no longer, a fifth update to the lateral trajectory profile to unlock the bank angle parameter and to unlock the ground speed parameter.

15. A non-transitory computer-readable medium (330) storing a set of instructions, the set of instructions comprising:
one or more instructions that, when executed by one or more processors (320) of a flight management system, FMS (220), of an aircraft (210), cause the FMS (220) to perform the method of any of claims 8 to 14.

100

Flight Plan

Stick Trajectory Profile

Lateral Trajectory Profile

Vertical Trajectory Profile

Flight Management System (FMS)

Determine

102

Determine that a leg of the lateral trajectory profile is active

Leg is Active

**FIG. 1A**

100

104

Bank Angle

Flight Management System (FMS)

Determine

Determine a lateral distance threshold associated with an end waypoint of the leg

Lateral Distance Threshold

Aircraft Sensor System

Ground Speed

**FIG. 1B**

**FIG. 1C**

100

Flight Management System (FMS)

Determine

106
Determine whether the lateral distance threshold is satisfied

Lateral Distance Threshold Satisfied

OR

Lateral Distance Threshold Not Satisfied

Aircraft Sensor System

Aircraft Position

Flight Plan

Waypoint Position

EP 4 779 429 A1

FIG. 1D

100

Flight
Management
System
(FMS)

Determine

110
Determine that a transition associated with
the end waypoint and another leg is active

Transition is
Active

112
Determine that the leg is active

Leg is
Active

Flight Plan

Stick
Trajectory
Profile

Lateral
Trajectory
Profile

Vertical
Trajectory
Profile

**FIG. 1E**

100

Flight Management System (FMS)

Perform Update

114
Perform an update to the lateral trajectory profile to lock the ground speed parameter

Locked Ground Speed Parameter

Transition is Active

Leg is Active

Flight Plan

Stick Trajectory Profile

Lateral Trajectory Profile

Vertical Trajectory Profile

EP 4 779 429 A1

**FIG. 1F**

EP 4 779 429 A1

100

116
Determine that the leg of the lateral
trajectory profile is not active

| Flight Management System (FMS) | → | Determine | → | Leg is not Active |

Flight Plan

Stick Trajectory Profile | Lateral Trajectory Profile | Vertical Trajectory Profile

**FIG. 1G**

EP 4 779 429 A1

100

Flight
Management
System
(FMS)

Perform
Update

118
Perform update to the lateral trajectory
profile to unlock the bank angle parameter

Unlocked
Bank Angle
Parameter

Leg is not
Active

Flight Plan

Stick
Trajectory
Profile

Lateral
Trajectory
Profile

Vertical
Trajectory
Profile

**FIG. 1H**

**FIG. 1I**

EP 4 779 429 A1

EP 4 779 429 A1

100

Flight
Management
System
(FMS)

Perform
Update

122
Perform update to the lateral trajectory
profile to cause the lateral trajectory profile to
indicate that the bank angle is to be
dynamically computed

Bank Angle is
to be
Dynamically
Computed

Lateral
Distance
Threshold
Not Satisfied

Unlocked
Bank Angle
Parameter

Flight Plan

Stick
Trajectory
Profile

Lateral
Trajectory
Profile

Vertical
Trajectory
Profile

**FIG. 1J**

124
Perform update to the lateral trajectory profile to cause the lateral trajectory profile to indicate that the ground speed is to be dynamically computed

Flight Management System (FMS)

Perform Update

Ground Speed is to be Dynamically Computed

Unlocked Ground Speed Parameter

Transition is not Active

Flight Plan

Stick Trajectory Profile

Lateral Trajectory Profile

Vertical Trajectory Profile

**FIG. 1K**

EP 4 779 429 A1

200

Aircraft 210

Flight Management System (FMS) 220

Aircraft Sensor System 230

FIG. 2

300

Bus
310

Processor
320

Memory
330

Input
Component
340

Output
Component
350

Communication
Component
360

FIG. 3

**FIG. 4**

EP 4 779 429 A1

FIG. 5B

FIG. 5A

FIG. 6A

FIG. 6B

FIG. 6C

700

Start

NO                    YES

Leg *i*
active?

710

Bank Angle
Parameter
Dynamically
Computed

740

NO                    YES

Lateral
distance threshold
satisfied?

720

Locked
Bank Angle
Parameter

730

Ground Speed
Parameter
Dynamically
Computed

780

NO                    YES

Transition
Active?

750

NO                    YES

Leg *i*
(still)
active?

760

Locked
Ground Speed
Parameter

770

Bank Angle
and Ground
Speed
Unlocked

790

**FIG. 7**

## EUROPEAN SEARCH REPORT

| | Application Number |
| --- | --- |
| | EP 25 21 0676 |

### DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| X | US 5 646 854 A (BEVAN ERIK THANE [US]) 8 July 1997 (1997-07-08) | 1-7 | INV. G05D1/48 |
| A | * column 4, lines 4-23, 38-40; claims 1,17; figures 1-3; table 2 * <br> * column 6, lines 48-51 * <br> * column 9, lines 44-51 * <br> ----- | 8-15 | G05D109/20 <br> G05D1/65 <br> G05D1/646 <br> G05D1/43 |
| X | US 11 733 713 B2 (HONEYWELL INT INC [US]) 22 August 2023 (2023-08-22) | 8-15 | |
| A | * column 4, lines 9-30; figures 7,11 * <br> * column 5, lines 1-19 * <br> * column 7, lines 12-14, 46-67 - column 8, lines 1-8 * <br> ----- | 1-7 | |
| A | EP 3 944 217 A1 (GE AVIATION SYSTEMS LLC [US]) 26 January 2022 (2022-01-26) <br> * paragraphs [0020] - [0023]; claims 1-4,10; figures 1,6 * <br> ----- | 1-15 | |
| A | FR 2 906 622 A1 (THALES SA [FR]) 4 April 2008 (2008-04-04) <br> * page 5, lines 17-28; claim 1; figures 1,4 * <br> * page 6, lines 3-6 * <br> * page 7, lines 18-32 * <br> ----- | 1-15 | **TECHNICAL FIELDS SEARCHED (IPC)** <br><br> G05D |

The present search report has been drawn up for all claims

| Place of search | Date of completion of the search | Examiner |
| --- | --- | --- |
| Munich | 4 April 2026 | Mallet, Philippe |

EPO FORM 1503 03.82 (P04C01)

## ANNEX TO THE EUROPEAN SEARCH REPORT
## ON EUROPEAN PATENT APPLICATION NO.

EP 25 21 0676

This annex lists the patent family members relating to the patent documents cited in the above-mentioned European search report.
The members are as contained in the European Patent Office EDP file on
The European Patent Office is in no way liable for these particulars which are merely given for the purpose of information.

04-04-2026

| Patent document cited in search report | | Publication date | Patent family member(s) | | Publication date |
|---|---|---|---|---|---|
| US 5646854 | A | 08-07-1997 | NONE | | |
| US 11733713 | B2 | 22-08-2023 | EP | 3901724 A1 | 27-10-2021 |
| | | | US | 2021325903 A1 | 21-10-2021 |
| EP 3944217 | A1 | 26-01-2022 | CN | 113970929 A | 25-01-2022 |
| | | | EP | 3944217 A1 | 26-01-2022 |
| | | | US | 2022026927 A1 | 27-01-2022 |
| FR 2906622 | A1 | 04-04-2008 | FR | 2906622 A1 | 04-04-2008 |
| | | | US | 2008086243 A1 | 10-04-2008 |